# EUROPEAN PATENT APPLICATION

(11) **EP 4 694 296 A1**
(43) Date of publication of application: **11.02.2026**
(21) Application number: 24784370.9
(22) Date of filing: 03.04.2024
(51) Int. Cl.: H04W 24/08

(54) **INFORMATION TRANSMISSION METHOD AND APPARATUS**

(30) Priority: 07.04.2023 CN 202310369533
(71) Applicant: Datang Mobile Communications Equipment Co., Ltd., Beijing 100085 (CN)
(72) Inventor: WANG, Jiaqing, Beijing 100085 (CN); YANG, Meiying, Beijing 100085 (CN)
(74) Representative: Maiwald GmbH
(86) International application number: PCT/CN2024/085881
(87) International publication number: WO 2024/208288

(57) **Abstract**

The present disclosure provides an information transmission method and device. The information transmission method in the embodiments of the present disclosure includes: a terminal obtaining first indication information, wherein the first indication information comprises spatial domain adaptation indication information and/or power domain adaptation indication information; the terminal measuring reference signal resource associated with the first indication information and reporting a measurement result.

## Description

### CROSS-REFERENCE TO RELATED APPLICATION

This disclosure claims priority to the Chinese Patent Application No. 202310369533.6 filed with the China Patent Office on April 7, 2023, entitled "Information Transmission Method and Device," the entire contents of which are incorporated herein by reference.

### TECHNICAL FIELD

The present disclosure relates to the field of communication technologies, and in particular, to an information transmission method and device.

### BACKGROUND

Compared with the 4^{th} Generation mobile communication technology (4G), the New Radio (NR) system needs to support high frequency bands, large bandwidth, and large-scale antenna technology. While improving system performance, the power consumption of the 5^{th} Generation mobile communication technology (5G) base stations is increased to 2 to 3 times that of 4G base stations. Energy consumption is a key indicator of operators' operating expenses (OPEX). According to operators' data, OPEX of energy consumption in mobile networks accounts for 23% of total OPEX, becoming a heavy burden for the widespread deployment of 5G networks. This energy consumption issue also limits their application in vertical industries and the large-scale popularization of 5G terminals. According to actual measurement results, most of the energy consumption of base stations comes from the wireless access network, especially the active antenna unit (AAU) part of the large-scale antenna array. How to reduce the energy consumption of base stations is an urgent problem to be solved.

### SUMMARY

The purpose of the present disclosure is to provide an information transmission method and device to solve the problem of how to reduce the energy consumption of a base station.

To achieve the above purpose, the present disclosure provides an information transmission method, comprising:
a terminal obtaining first indication information, wherein the first indication information comprises spatial domain adaptation indication information and/or power domain adaptation indication information;
the terminal measuring reference signal resource associated with the first indication information and reporting a measurement result.

In some embodiments, the spatial domain adaptation indication information comprises at least one of the following:
spatial domain adaptation type information;
antenna port array related information;
power information associated with channel state information reference signal CSI-RS resource;
transmission configuration indicator state indication information.

In some embodiments, the spatial domain adaptation indication information is spatial domain adaptation pattern or mode information.

In some embodiments, the terminal obtaining the spatial domain adaptation type information comprises:
the terminal obtaining the spatial domain adaptation type information through radio resource control RRC signaling or dynamic signaling;
or, the terminal obtaining the spatial domain adaptation type information through the antenna port array related information associated with the spatial domain adaptation indication information.

In some embodiments, a set of spatial domain adaptation patterns is associated with a channel state information reference signal CSI-RS resource; or each CSI-RS resource corresponds to a spatial domain adaptation pattern.

In some embodiments, when the spatial domain adaptation type information indicates a first spatial domain adaptation type, each spatial domain adaptation pattern corresponds to an independent set of antenna port array related information, and/or the set of spatial domain adaptation patterns is associated with a CSI-RS resource;
when the spatial domain adaptation type information indicates a second spatial domain adaptation type, multiple spatial domain adaptation patterns correspond to the same antenna port array related information, and/or each CSI-RS resource corresponds to a spatial domain adaptation pattern.

In some embodiments, when the set of spatial domain adaptation patterns is associated with a CSI-RS resource, an identifier of the spatial domain adaptation pattern corresponding to the CSI-RS resource is a maximum identifier or a minimum identifier of the spatial domain adaptation pattern in the set of spatial domain adaptation patterns.

In some embodiments, periodic or semi-persistent CSI-RS resource corresponding to at least one spatial domain adaptation pattern is associated with a same reporting time.

In some embodiments, the periodic or semi-persistent CSI-RS resource corresponding to the at least one spatial domain adaptation pattern comprises CSI-RS resource corresponding to the spatial domain adaptation pattern within a time window, and the CSI-RS resource corresponding to the spatial domain adaptation pattern within the time window is associated with a CSI report setting, and the time window is a time window associated with the spatial domain adaptation;
or, the CSI-RS resource associated with the at least one spatial domain adaptation pattern is associated with at least one CSI report setting, and the at least one CSI report setting is reported in a same time unit.

In some embodiments, the method in embodiments of the present disclosure further comprises:
obtaining the time window indicated by a network side device through RRC signaling or dynamic signaling;
or, determining the time window according to a time period occupied by CSI-RS resource corresponding to the set of spatial domain adaptation patterns.

In some embodiments, each spatial domain adaptation pattern associated with a same CSI report setting corresponds to an independent CSI reporting quantity;
or, multiple spatial domain adaptation patterns associated with the same CSI report setting correspond to a same first CSI reporting quantity, and the multiple spatial domain adaptation patterns correspond to independent second CSI reporting quantities.

In some embodiments, the spatial domain adaptation pattern information comprises M spatial domain adaptation patterns among N spatial domain adaptation patterns configured by the network side device, M≤N, and M and N are positive integers respectively;
the terminal measuring the reference signal resource associated with the spatial domain adaptation indication information and reporting the measurement result comprises:
the terminal measuring the reference signal resource associated with the M spatial domain adaptation patterns and reporting M measurement results.

In some embodiments, the terminal reporting the M measurement results comprises:
the terminal reporting a first measurement result and measurement result relative information;
wherein, the first measurement result is a measurement result corresponding to a first spatial domain adaptation pattern among the M measurement results;
the measurement result relative information refers to relative information between a second measurement result and the first measurement result, wherein the second measurement result is a measurement result corresponding to a second spatial domain adaptation pattern among the M measurement results.

In some embodiments, the method in embodiments of the present disclosure further comprises:
the terminal obtaining second indication information, wherein the second indication information comprises at least one of spatial domain adaptation update information and power domain adaptation update information;
the terminal reporting channel state information CSI or stopping reporting the CSI according to the second indication information.

In some embodiments, the terminal obtaining the spatial domain adaptation update information comprises:
obtaining the spatial domain adaptation update information through first dynamic signaling, wherein the first dynamic signaling comprises first downlink control information DCI or a first media access control control element MAC CE.

In some embodiments, the spatial domain adaptation update information comprises at least one of the following:
spatial domain adaptation activation information or spatial domain adaptation deactivation information;
subset information of the set of spatial domain adaptation patterns.

In some embodiments, the first DCI satisfies at least one of the following:
scrambled with a first radio network temporary identity RNTI, wherein the first RNTI comprises an RNTI dedicated to network energy saving, an RNTI dedicated to spatial domain energy saving, or an RNTI dedicated to spatial domain energy saving and power domain energy saving;
the first DCI comprises DCI format 0_1 or DCI format 0_2;
a first field of the first DCI carries spatial domain adaptation update information or non-spatial domain adaptation update information;
a first predefined code point of the first DCI is associated with verification information of the spatial domain adaptation activation information;
a second predefined code point of the first DCI is associated with verification information of the spatial domain adaptation deactivation information;
a second field of the first DCI is used to indicate whether spatial domain adaptation is supported.

In some embodiments, code points carried by the first field correspond to different trigger states, each trigger state is associated with at least one CSI report setting, and each CSI report setting is associated with at least one spatial domain adaptation pattern.

In some embodiments, when CSI report setting associated with the first field belongs to a first CSI report setting set, the first field is used to indicate activation information associated with spatial domain adaptation or deactivation information associated with spatial domain adaptation;
or, when the CSI report setting associated with the first field belongs to a second CSI report setting set, the first field is used to indicate semi-persistent reporting deactivation information associated with non-spatial domain adaptation or semi-persistent reporting activation information associated with non-spatial domain adaptation;
or, when CSI-RS resource associated with the first field belongs to a first CSI-RS resource set, the first field is used to indicate activation information associated with spatial domain adaptation or deactivation information associated with spatial domain adaptation;
or, when the CSI-RS resource associated with the first field belongs to a second CSI-RS resource set, the first field is used to indicate semi-persistent reporting deactivation information associated with non-spatial domain adaptation or semi-persistent reporting activation information associated with non-spatial domain adaptation.

In some embodiments, the terminal reporting the channel state information CSI or stopping reporting the CSI according to the spatial domain adaptation update information comprises:
when a trigger state indicated by the first DCI belongs to a first trigger state set or the trigger state indicated by the first DCI is associated with a third CSI-RS resource set, the terminal performing aperiodic CSI reporting related to spatial domain adaptation; and/or, when the trigger state indicated by the first DCI belongs to a second trigger state set or the trigger state indicated by the first DCI is associated with a fourth CSI-RS resource set, the terminal performing aperiodic CSI reporting related to non-spatial domain adaptation, the first trigger state set and the second trigger state set are two different trigger state sets, and the third CSI-RS resource set and the fourth CSI-RS resource set are two different CSI-RS resource sets;
or, when a third field or a target bit in the first DCI indicates aperiodic CSI reporting related to spatial domain adaptation, the terminal performing aperiodic CSI reporting related to spatial domain adaptation; and/or, when the third field or the target bit in the first DCI indicates aperiodic CSI reporting related to non-spatial domain adaptation, the terminal performing aperiodic CSI reporting related to non-spatial domain adaptation.

In some embodiments, at least one spatial domain adaptation pattern is associated with at least one periodic CSI-RS resource and at least one periodic CSI report setting;
the terminal reporting the channel state information CSI or stopping reporting the CSI according to the spatial domain adaptation update information comprises:
reporting the CSI in a first resource according to the spatial domain adaptation activation information; or stopping reporting the CSI in the first resource according to the spatial domain adaptation deactivation information; wherein the first resource is a resource corresponding to the periodic CSI report setting;
and/or, according to the spatial domain adaptation activation information, reporting the CSI in a second resource; or, according to the spatial domain adaptation deactivation information, stopping reporting the CSI in the second resource, wherein the second resource is a resource corresponding to the periodic CSI report setting associated with the subset information of the set of spatial domain adaptation patterns.

In some embodiments, at least one spatial domain adaptation pattern is associated with at least one periodic CSI-RS resource or semi-persistent CSI-RS resource, and the at least one spatial domain adaptation patterns is associated with at least one semi-persistent CSI report setting;

the terminal reporting the channel state information CSI or stopping reporting the CSI according to the spatial domain adaptation update information comprises:
according to the spatial domain adaptation activation information, activating semi-persistent CSI reporting on a third resource, or deactivating semi-persistent CSI reporting on the third resource, wherein the third resource is a resource corresponding to the semi-persistent CSI report setting associated with the subset information of the set of spatial domain adaptation patterns.

In some embodiments, at least one spatial domain adaptation pattern is associated with at least one periodic CSI-RS resource, semi-persistent CSI-RS resource, or aperiodic CSI-RS resource, and the at least one spatial domain adaptation pattern is associated with at least one aperiodic CSI report setting;
the terminal reporting the channel state information CSI according to the spatial domain adaptation update information comprises:
according to the spatial domain adaptation update information, performing aperiodic CSI reporting on a fourth resource, wherein the fourth resource is a resource corresponding to the aperiodic CSI report setting associated with the subset information of the set of spatial domain adaptation patterns.

In some embodiments, the power domain adaptation update information is related to a first set or a second set;
wherein, the first set is a subset of a first power offset value set, and the second set is a subset of a second power offset value set;
the first power offset value set is a set of CSI-RS and PDSCH power offset values, and the second power offset value set is a set of SSB and CSI-RS power offset values.

In some embodiments, the power domain adaptation update information comprises:
power domain network energy saving activation information or power domain network energy saving deactivation information, or power domain network energy saving aperiodic reporting triggering information.

In some embodiments, the terminal obtaining the power domain adaptation update information comprises:
obtaining the power domain adaptation update information through second dynamic signaling, wherein the second dynamic signaling comprises second downlink control information DCI or a second media access control control element MAC CE.

In some embodiments, the second DCI satisfies at least one of the following:
scrambled with a second radio network temporary identity RNTI, wherein the second RNTI comprises an RNTI dedicated to power domain network energy saving, or an RNTI dedicated to spatial domain and power domain energy saving;
the second DCI comprises DCI format 0_1 or DCI format 0_2;
code points carried by the second DCI correspond to different trigger states, each trigger state is associated with at least one CSI report setting, and each CSI report setting is associated with at least one power domain adaptation pattern;
a fourth field in the second DCI carries the power domain adaptation update information or the spatial domain adaptation update information;
a third predefined code point of the second DCI is associated with verification information of the power domain network energy saving activation information;
a fourth predefined code point of the second DCI is associated with verification information of the power domain network energy saving deactivation information;
a target indicator field of the second DCI is used to indicate that information carried by the fourth field is power domain adaptation update information or spatial domain adaptation update information.

In some embodiments, the terminal reporting the channel state information CSI or stopping reporting the CSI according to the power domain adaptation update information comprises:
the terminal reporting the CSI according to the power domain network energy saving activation information or the power domain network energy saving aperiodic reporting triggering information;
or, the terminal stopping reporting the CSI according to the power domain network energy saving deactivation information.

Embodiments of the present disclosure further provide an information transmission method, comprising:
a network side device sending first indication information, wherein the first indication information comprises spatial domain adaptation indication information and/or power domain adaptation indication information.

In some embodiments, the spatial domain adaptation indication information comprises at least one of the following:
spatial domain adaptation type information;
antenna port array related information;
power information associated with channel state information reference signal CSI-RS resource;
transmission configuration indicator state indication information.

In some embodiments, the spatial domain adaptation indication information is spatial domain adaptation pattern or mode information.

In some embodiments, a set of spatial domain adaptation patterns is associated with a channel state information reference signal CSI-RS resource; or each CSI-RS resource corresponds to a spatial domain adaptation pattern.

In some embodiments, when the spatial domain adaptation type information indicates a first spatial domain adaptation type, each spatial domain adaptation pattern corresponds to an independent set of antenna port array related information, and/or the set of spatial domain adaptation patterns is associated with a CSI-RS resource;
when the spatial domain adaptation type information indicates a second spatial domain adaptation type, multiple spatial domain adaptation patterns correspond to the same antenna port array related information, and/or each CSI-RS resource corresponds to a spatial domain adaptation pattern.

In some embodiments, when the set of spatial domain adaptation patterns is associated with a CSI-RS resource, an identifier of the spatial domain adaptation pattern corresponding to the CSI-RS resource is a maximum identifier or a minimum identifier of the spatial domain adaptation pattern in the set of spatial domain adaptation patterns.

In some embodiments, periodic or semi-persistent CSI-RS resource corresponding to at least one spatial domain adaptation pattern is associated with a same reporting time.

In some embodiments, the periodic or semi-persistent CSI-RS resource corresponding to the at least one spatial domain adaptation pattern comprises CSI-RS resource corresponding to the spatial domain adaptation pattern within a time window, and the CSI-RS resource corresponding to the spatial domain adaptation pattern within the time window is associated with a CSI report setting, and the time window is a time window associated with the spatial domain adaptation;
or, the CSI-RS resource associated with the at least one spatial domain adaptation pattern is associated with at least one CSI report setting, and the at least one CSI report setting is reported in a same time unit.

In some embodiments, each spatial domain adaptation pattern associated with a same CSI report setting corresponds to an independent CSI reporting quantity;
or, multiple spatial domain adaptation patterns associated with the same CSI report setting correspond to a same first CSI reporting quantity, and the multiple spatial domain adaptation patterns correspond to independent second CSI reporting quantities.

In some embodiments, the method in embodiments of the present disclosure further comprises:
sending second indication information, wherein the second indication information comprises at least one of spatial domain adaptation update information and power domain adaptation update information.

In some embodiments, the spatial domain adaptation update information comprises at least one of the following:
spatial domain adaptation activation information or spatial domain adaptation deactivation information;
subset information of the set of spatial domain adaptation patterns.

In some embodiments, the power domain adaptation update information comprises:
power domain network energy saving activation information or power domain network energy saving deactivation information, or power domain network energy saving aperiodic reporting triggering information.

Embodiments of the present disclosure further provide an information transmission device, comprising:
a first obtaining unit, configured to obtain first indication information, wherein the first indication information comprises spatial domain adaptation indication information and/or power domain adaptation indication information;
a first processing unit, configured to measure reference signal resource associated with the first indication information and report a measurement result.

Embodiments of the present disclosure further provide an information transmission device, comprising:
a first sending unit, configured to send first indication information, wherein the first indication information comprises spatial domain adaptation indication information and/or power domain adaptation indication information.

Embodiments of the present disclosure further provide an information transmission device, comprising: a memory, a transceiver, and a processor; wherein,
the memory is configured to store a computer program; the transceiver is configured to transmit and receive data under the control of the processor; the processor is configured to read the computer program in the memory and perform following operations:
obtaining first indication information, wherein the first indication information comprises spatial domain adaptation indication information and/or power domain adaptation indication information;
measuring reference signal resource associated with the first indication information and reporting a measurement result.

In some embodiments, the spatial domain adaptation indication information comprises at least one of the following:
spatial domain adaptation type information;
antenna port array related information;
power information associated with channel state information reference signal CSI-RS resource;
transmission configuration indicator state indication information.

In some embodiments, the spatial domain adaptation indication information is spatial domain adaptation pattern or mode information.

In some embodiments, the processor further implements following steps:
obtaining second indication information, wherein the second indication information comprises at least one of spatial domain adaptation update information and power domain adaptation update information;
reporting channel state information CSI or stopping reporting the CSI according to the second indication information.

Embodiments of the present disclosure further provide an information transmission device, comprising: a memory, a transceiver, and a processor; wherein,
the memory is configured to store a computer program; the transceiver is configured to transmit and receive data under the control of the processor; and the processor is configured to read the computer program in the memory and perform following operations:
sending first indication information, wherein the first indication information comprises spatial domain adaptation indication information and/or power domain adaptation indication information.

In some embodiments, the spatial domain adaptation indication information comprises at least one of the following:
spatial domain adaptation type information;
antenna port array related information;
power information associated with channel state information reference signal CSI-RS resource;
transmission configuration indicator state indication information.

In some embodiments, the spatial domain adaptation indication information is spatial domain adaptation pattern or mode information.

Embodiments of the present disclosure further provide a processor-readable storage medium, storing a computer program, wherein the computer program is configured to cause a processor to execute steps of the information transmission method as described above.

The above technical solution disclosed in the present disclosure has at least the following beneficial effects:
In the above-mentioned solution of the embodiments of the present disclosure, a terminal obtains first indication information, wherein the first indication information includes spatial domain adaptation indication information and/or power domain adaptation indication information; the terminal measures reference signal resource associated with the first indication information and reports a measurement results. Through the above solution, the terminal can adaptively determine the reference signal resource that needs to be measured and report the measurement result, so that the network side device can adaptively adjust antenna power or turning-on and turning-off of an antenna port based on the measurement result, thereby reducing the energy consumption of the base station.

### BRIEF DESCRIPTION OF THE DRAWINGS

FIG. 1 shows a structural diagram of a network system to which embodiments of the present disclosure may be applied;
FIG. 2 shows a first schematic diagram of a mapping relationship between 32 CSI-RS antenna ports and antenna arrays;
FIG. 3 shows a second schematic diagram of a mapping relationship between 32 CSI-RS antenna ports and antenna arrays;
FIG. 4 shows a first flowchart of an information transmission method according to an embodiment of the present disclosure;
FIG. 5 shows a first schematic diagram showing a relationship between a time window and a spatial domain adaptation pattern;
FIG. 6 shows a second schematic diagram showing a relationship between a time window and a spatial domain adaptation pattern;
FIG. 7 shows a second flowchart of an information transmission method according to an embodiment of the present disclosure;
FIG. 8 shows a first schematic diagrams of units of an information transmission device according to an embodiment of the present disclosure;
FIG. 9 shows a second schematic diagram of units of an information transmission device according to an embodiment of the present disclosure;
FIG. 10 shows a first structural block diagram of an information transmission device according to an embodiment of the present disclosure;
FIG. 11 shows a second structural block diagram of an information transmission device according to an embodiment of the present disclosure.

### DETAILED DESCRIPTION

The technical solutions in embodiments of the present disclosure will be clearly and completely described below in conjunction with the drawings in the embodiments of the present disclosure. Obviously, the described embodiments are only part of the embodiments of the present disclosure, rather than all the embodiments. Based on the embodiments of the present disclosure, all other embodiments obtained by those skilled in the art without creative work shall fall within the scope of protection of the present disclosure.

The terms "first", "second", and the like in the description and claims of the present disclosure are used to distinguish similar objects but not necessarily to describe a particular sequence or order. It is to be understood that the terms so used are interchangeable under appropriate circumstances such that the embodiments of the disclosure described herein may be practiced in sequences other than those illustrated or described herein. In addition, the terms "comprise" and "having" and any variations thereof are intended to cover a non-exclusive inclusion. For example, a process, method, system, product or device that includes a series of steps or units is not necessarily limited to those steps or units expressly listed, but may include other steps or units not expressly listed or inherent to such process, method, product or device.

In the embodiments of the present disclosure, the term "and/or" describes an association relationship of associated objects, indicating that three relationships may exist. For example, A and/or B may indicate three situations: A exists alone, A and B exist at the same time, and B exists alone. The character "/" generally indicates that the previous and next associated objects are in an "or" relationship. In the embodiments of the present disclosure, the term "a plurality of" refers to two or more than two, and other quantifiers are similar thereto.

In the embodiments of the present disclosure, terms such as "exemplary" or "for example" are used to indicate examples, instances or illustrations. Any embodiment or design described as "exemplary" or "for example" in the embodiments of the present disclosure should not be construed as preferred or advantageous over other embodiments or designs. Rather, the use of terms such as "exemplary" or "for example" is intended to present relevant concepts in a concrete fashion.

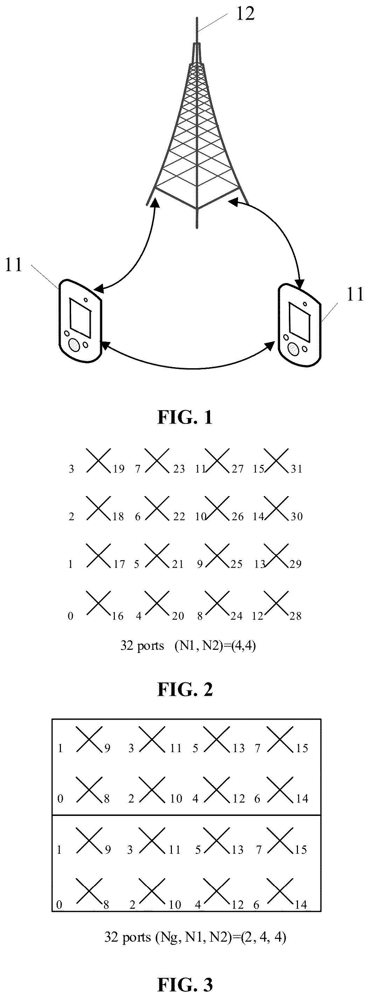

FIG. 1 shows a block diagram of a wireless communication system to which embodiments of the present disclosure may be applied. The wireless communication system includes a terminal device 11 and a network side device 12. The terminal device 11 may also be referred to as a terminal or user equipment (UE). It should be noted that the embodiments of the present disclosure do not limit the specific type of the terminal 11. The network side device 12 may be a base station or a core network. It should be noted that in the embodiment of the present disclosure, only a base station in the NR system is taken as an example, but the specific type of the base station is not limited.

To enable those skilled in the art to better understand the embodiments of the present disclosure, the following description is first given.

The base station may consider shutting down channels of multiple antennas, such as antenna ports or certain antenna panels. When certain channels are shut down, antenna ports of corresponding antennas are deactivated. Compared with 4G base stations, the number of channels in 5G base stations has increased dramatically. Channel shutdown can not only reduce the power consumption of power amplifiers but also reduce the static power consumption of channels. Currently, base station manufacturers have adopted channel shutdown as a mainstream energy saving solution. Compared with shutting down base stations in a time domain, channel shutdown has obvious advantages in ensuring service continuity, and its application scenarios are not limited to light-load base station business scenarios.

The measurement and reporting of Channel State Information (CSI) are closely related to the CSI Framework. The CSI Framework consists of two parts: Resource Setting and Reporting Setting. The Resource Setting is used to configure the reference signal of CSI to correspond to the high-level signaling CSI resource configuration information element (CSI-ResourceConfig IE, IE is Information Element). Each CSI-ResourceConfig contains at least one non-zero power channel state information reference signal synchronization signal block (NZP-CSI-RS-SSB) and/or at least one non-zero power channel state information reference signal resource set (NZP-CSI-RS-ResourceSet). Each NZP-CSI-RS-ResourceSet contains at least one NZP-CSI-RS-Resource. Reporting Setting is mainly completed through the radio resource control (RRC) layer signaling CSI report setting element (CSI-ReportConfig IE), which is used to configure the CSI reporting behavior. Each CSI-ReportConfig is associated with one or more resource configurations (CSI-ResourceConfig), indicating the resource configuration used for channel measurement and/or interference measurement. In addition, each CSI-ReportConfig also includes: CSI reporting time domain behavior, including reporting resource configurations like periodic, semi-persistent based on the physical uplink control channel (PUCCH) (semiPersistentOnPUCCH), semi-persistent based on the physical uplink shared channel (PUSCH) (semiPersistentOnPUSCH), aperiodic CSI reporting type and corresponding reporting period, offset, etc.; CSI reporting related frequency domain behavior, e.g., the frequency domain granularity of the channel quality indicator (CQI) and precoding matrix indicator (PMI), including wideband and subband; measurement restriction configuration, including channel measurement restrictions and interference measurement restrictions; CSI related indicator quantity reported by the UE, including relevant configuration parameters like CQI, PMI, channel state information reference signal resource indicator (CSI-RS Resource Indicator, CRI), synchronization signal physical broadcast channel block resource indicator (SS/PBCH Block Resource Indicator, SSBRI), Layer Indicator (LI), Rank Indicator (RI), Layer 1 Reference Signal Received Power (L1-RSRP), or Layer 1 Signal-to-Noise and Interference Ratio (L1-SINR), etc. In addition, each CSI-Report Config also includes a codebook configuration, including Type I, Type II, or enhanced Type II codebooks and codebook restriction subsets;

The Third Generation Partnership Projects (3GPP) New Radio (NR) protocol supports CSI-RS port numbers including 1, 2, 4, 8, 16, 24, and 32. Typically, multiple CSI-RS antenna ports can be mapped into a two-dimensional antenna array. An example of a 32-port array is shown in FIGS. 2 and 3.

In the above antenna port array, the horizontal direction includes N1 dual-polarized antennas, the vertical direction includes N2 dual-polarized antennas, and Ng is the number of antenna panels/antenna array surfaces (Panels, which may also be called panels). FIG. 2 shows that a single antenna panel has 32 antenna ports, and FIG. 3 shows that multiple panels (Multi Panel) are aggregated to obtain 32 antenna ports.

In related technologies, in order to support spatial domain adaptation shutdown, it is necessary to support two shutdown modes: type 1 shutdown and type 2 shutdown. Among them, type 1 shutdown will directly shut down different antenna ports, while type 2 shutdown will shut down some antenna elements associated with the antenna port and will not deactivate the antenna port. In order to support different types of spatial domain shutdown, the UE needs to perform channel measurement on the CSI Reference Signal (CSI-RS) associated with different antenna ports and report measurement results. However, in related technologies, the number of CSI report settings (CSI-Report Config) that can be used for channel measurement is limited, resulting in that some channel state information (CSI) cannot be reported in a timely manner. Multiple CSI reports will undoubtedly increase the CSI-RS transmission power and system overhead on the base station side, and will also increase the UE measurement complexity and UE feedback overhead. Therefore, it is necessary to enhance the relevant technologies.

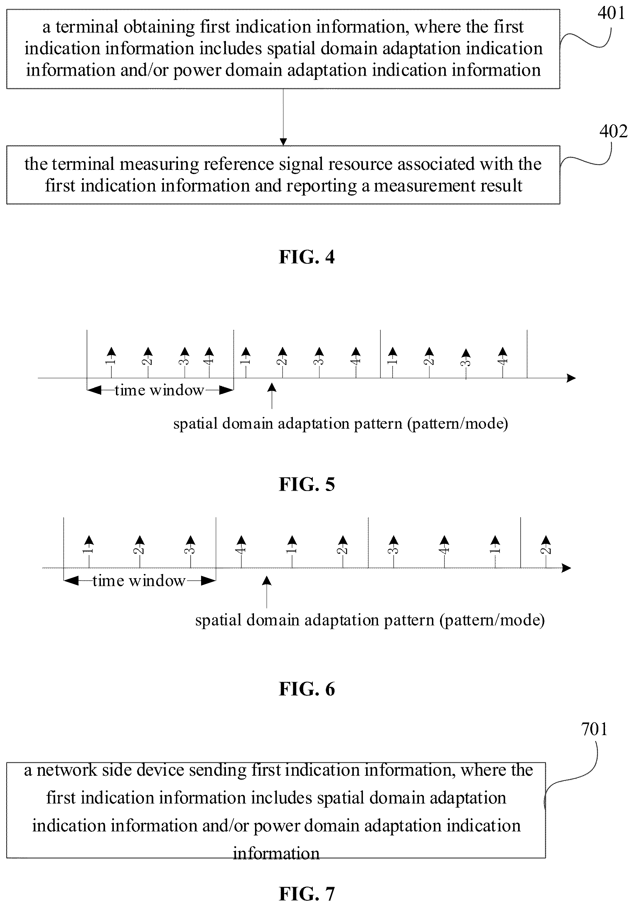

As shown in FIG. 4, embodiments of the present disclosure provide an information transmission method, including:
Step 401: a terminal obtaining first indication information, where the first indication information includes spatial domain adaptation indication information and/or power domain adaptation indication information.

In some embodiments, the spatial domain adaptation indication information is associated with a reference signal resource, and the power domain adaptation indication information is associated with a reference signal resource. The spatial domain adaptation information may also be described as spatial domain antenna element adaptation indication information or spatial domain indication information. The reference signal resource may be a CSI-RS.

Step 402: the terminal measuring reference signal resource associated with the first indication information and reporting a measurement result.

In the above-mentioned solution of the embodiment of the present disclosure, the terminal obtains the first indication information, where the first indication information includes spatial domain adaptation indication information and/or power domain adaptation indication information; the terminal measures the reference signal resource associated with the first indication information and reports the measurement result. Through the above solution, the terminal can adaptively determine the reference signal resource that need to be measured and report the measurement result, so that the network side device can adaptively adjust the antenna power or the opening and closing of the antenna port based on the measurement result, thereby reducing the energy consumption of the base station.

The embodiments of the present disclosure are respectively limited from the configuration of the first indication information, spatial domain adaptation enhancement and reporting enhancement, and the update of spatial domain adaptation and/or power domain adaptation. The specific implementation of the present disclosure is described in detail from these situations. It should be noted that these situations can be used separately or in combination in the specific implementation.

Solution 1: Configuration of the first indication information.

In some embodiments of the present disclosure, the spatial domain adaptation indication information includes at least one of the following:
spatial domain adaptation type information, which is used to indicate whether the spatial domain adaptation type is type 1 spatial domain adaptation or type 2 spatial domain adaptation; type 1 spatial domain adaptation refers to directly shutting down different antenna ports, and type 2 spatial domain adaptation refers to shutting down some antenna elements associated with the antenna port, and does not deactivate the antenna port; the spatial domain adaptation type information enables the terminal to determine whether to shut down different antenna ports or some antenna elements of the antenna port, thereby achieving the purpose of spatial domain adaptation shutdown;
antenna port array related information, the antenna port array related information including at least one of antenna port number information, antenna panel information, and antenna dimension information, the antenna dimension information including first dimension information (e.g., horizontal direction) and second dimension information (e.g., vertical direction) related to the antenna array;
power information associated with channel state information reference signal (CSI-RS) resource;
transmission configuration indicator (TCI) state indication information, where the TCI state indication information is used to indicate transmission beam information.

In some embodiments, the spatial domain adaptation indication information is spatial domain adaptation pattern/mode information.

It should be noted that the spatial domain adaptation pattern/mode in the embodiments of the present disclosure may also be described as a spatial domain adaptation design, manner, style, etc., and the above pattern may also be described as mode.

In some embodiments, the terminal obtains the spatial domain adaptation type information, including:
the terminal obtains the spatial domain adaptation type information through radio resource control RRC signaling or dynamic signaling;
or, the terminal obtains the spatial domain adaptation type information through the antenna port array related information associated with the spatial domain adaptation indication information.

In the embodiment of the present disclosure, the terminal may explicitly obtain the spatial domain adaptation type information by using RRC signaling or dynamic signaling, or may implicitly obtain the spatial domain adaptation type information through the antenna port array related information associated with the spatial domain adaptation indication information.

In some embodiments, when the spatial domain adaptation type information indicates a first spatial domain adaptation type (type 1 Spatial domain Adaptation, type 1 SA), each spatial domain adaptation pattern corresponds to an independent set of antenna port array related information, and/or the set of the spatial domain adaptation patterns is associated with a CSI-RS resource (e.g., a first CSI-RS resource);
when the spatial domain adaptation type information indicates a second spatial domain adaptation type (type 2 Spatial domain Adaptation, type 2 SA), multiple spatial domain adaptation patterns correspond to the same antenna port array related information, and/or each CSI-RS resource (configured by the network side device) corresponds to one of the spatial domain adaptation patterns.

In the embodiment of the present disclosure, multiple spatial domain adaptation patterns/modes of type 1 SA are associated with a nested CSI-RS resource, that is, each spatial domain adaptation pattern is associated with a subset of the first CSI-RS resource. At this time, the UE can measure different antenna port patterns and feedback the optimal PMI. For type 2 SA, the antenna port remains unchanged, but the shutdown of spatial domain elements affects the transmission beam width and direction. The UE needs to obtain accurate CSI measurement and reporting based on independently configured CSI-RS resources.

The above solution 1 is described below with reference to specific embodiments.

In an embodiment of the present disclosure, the base station side configures spatial domain adaptation indication information (or spatial domain indication information), e.g., spatial domain antenna element adaptation indication information, for the terminal using RRC signaling or dynamic signaling. The content of the spatial domain adaptation indication information includes at least one of the following: spatial domain adaptation type indication information, antenna port number information, antenna panel indication information, first dimension information and second dimension information related to the antenna array, spatial domain adaptation pattern/mode indication information, and CSI-RS resource-associated power information.

The spatial domain adaptation type indication information may use two phases of 1 bit to indicate type 1 spatial domain adaptation and type 2 spatial domain adaptation respectively;
the antenna port number is the total number of antenna ports included in the activated antenna array;
antenna panel indication information refers to antenna panel identification in a multi-antenna panel;
the first dimension and the second dimension refer to the dimensions n1, n2 of the two-dimensional antenna array, or the dimensions n1, n2 of the antenna array associated with the antenna panel;
the spatial domain adaptation pattern/mode indicator refers to the identification information of the spatial domain adaptation pattern, for example, there are 4 spatial domain adaptation pattern identification information, e.g., the index information is 0, 1, 2, 3, and each spatial domain adaptation pattern identification information corresponds to a different or the same antenna port based on type 1 spatial domain adaptation; or 4 spatial domain adaptation pattern identification information, for example, the index information is 0, 1, 2, 3, respectively corresponding to a different or the same antenna shutdown mode of type 2 spatial domain adaptation, for example, respectively corresponding to a non-shutdown spatial domain element, a 1/3-shutdown spatial domain element, a 1/2-shutdown spatial domain element, and a 1/4-shutdown spatial domain element.
   A: The spatial domain adaptation indication information explicitly includes the spatial domain adaptation type indication information:
      1) If the spatial domain adaptation type indication information is equal to a first value (i.e., corresponding to type 2 spatial domain adaptation), the base station uses RRC signaling/dynamic signaling to configure the spatial domain adaptation indication information for the UE, and all spatial domain adaptation patterns/modes are configured with the same or a set of antenna port array related information, for example, the antenna array related information may include at least one of the antenna port, antenna panel information, and antenna array dimension information; when the spatial domain adaptation type indication information is equal to the first value, in some embodiments, the base station configures a power information for each spatial domain adaptation pattern/mode, for example, the power information is a power offset value between the CSI-RS and the SSB. The UE receives CSI-RS resources and performs CSI measurement according to the spatial domain adaptation pattern configured by the base station.
      2) If the spatial domain adaptation type indication information is equal to a second value (i.e., corresponding to type 1 spatial domain adaptation), the base station uses RRC signaling/dynamic signaling to configure the spatial domain adaptation indication information for the UE, and each spatial domain adaptation pattern/mode is independently configured with a set of antenna port array related information, for example, the antenna array related information may include at least one of the antenna port, antenna panel information, and antenna array dimension information; when the spatial domain adaptation type indication information is equal to the second value, in some embodiments, the base station associates one or more power information for all spatial domain adaptation patterns/modes, for example, the power information is a power offset value between the CSI-RS and the SSB.
   B: The base station uses spatial domain adaptation information to implicitly indicate the spatial domain adaptation type:
      When the base station configures spatial domain adaptation indication information for the UE using RRC signaling/dynamic signaling, all spatial domain adaptation patterns/modes are associated with common spatial domain antenna port array related information, and the UE considers it to be type 2 spatial domain adaptation. Otherwise, if each spatial domain adaptation pattern/mode is associated with independent spatial domain antenna port array information, the UE considers it to be type 1 spatial domain adaptation.

In the embodiment of the present disclosure, different spatial domain adaptation patterns based on type 1 spatial domain adaptation may be configured with the same antenna port information. The base station indicates the spatial domain adaptation type to the UE side through explicit or implicit configuration, which helps the UE obtain the spatial domain adaptation type information, thereby assisting the UE to perform CSI measurement and reporting, and can realize the joint design of type 1 and type 2 spatial domain adaptation information to reduce configuration signaling overhead.

Solution 2: Spatial domain adaptation enhancement and reporting enhancement.

In some embodiments of the present disclosure, the set of spatial domain adaptation patterns is associated with a channel state information reference signal CSI-RS resource; or, each CSI-RS resource (configured by the network side device) corresponds to one of the spatial domain adaptation patterns/modes.

In this way, the association between the spatial domain adaptation pattern and the CSI-RS resources can be determined, so that the corresponding CSI-RS resources can be measured and reported according to the spatial domain adaptation pattern indicated by the network device.

In some embodiments, the base station configures a set of spatial domain adaptation patterns for the terminal using RRC signaling or dynamic signaling, and the set of spatial domain adaptation patterns can be associated with a CSI-RS resource (such as the first CSI-RS resource) by pre-agreement through a protocol or configuration through RRC signaling.

In an embodiment of the present disclosure, when each CSI-RS resource corresponds to one of the spatial domain adaptation patterns, preferably, the CSI-RS resource sets corresponding to multiple spatial domain adaptation patterns are associated with the same CSI-RS resource set under the same report setting, or the CSI-RS resource sets corresponding to the above multiple spatial domain adaptation patterns have the same frequency domain resources, and/or, have the same or different time domain resources.

In some embodiments, when the set of spatial domain adaptation patterns is associated with a CSI-RS resource (such as the first CSI-RS resource described below), the identifier of the spatial domain adaptation pattern corresponding to the CSI-RS resource is the maximum identifier or the minimum identifier of the spatial domain adaptation pattern in the set of spatial domain adaptation patterns. Alternatively, the CSI-RS resource is not associated with the identifier of the spatial domain adaptation pattern. In some embodiments, the periodic or semi-persistent CSI-RS resources corresponding to at least one of the spatial domain adaptation patterns are associated with the same reporting time.

Through this solution, the reporting time domain resources corresponding to the periodic or semi-persistent CSI-RS resources corresponding to the spatial domain adaptation pattern can be determined.

In some embodiments, the periodic or semi-persistent CSI-RS resources corresponding to the at least one spatial domain adaptation pattern include CSI-RS resources corresponding to the spatial domain adaptation pattern within a time window, and the CSI-RS resources corresponding to the spatial domain adaptation pattern (or a set or subset of spatial domain adaptation patterns) within the time window are associated with a CSI report setting, and the time window is a time window associated with the spatial domain adaptation;
or, (when the spatial domain adaptation type information indicates the second spatial domain adaptation type) CSI-RS resource associated with at least one spatial domain adaptation pattern is associated with at least one CSI report setting, and the at least one CSI report setting is reported in a same time unit.

Here, for the second spatial domain adaptation type, independent or separate CSI-RS resource associated with each spatial domain adaptation pattern, independent or separate CSI-RS resource set associated with at least one spatial domain adaptation pattern is associated with one CSI report setting or associated with multiple CSI report settings, and the multiple CSI report settings are reported in the same time unit. Preferably, the time unit may be a time slot or N time slots, and the value of N may be predefined by a protocol or configured by high-level signaling.

In some embodiments, the method of the present disclosure further includes:
obtaining the time window indicated by the network side device through RRC signaling or dynamic signaling;
or, determining the time window according to a time period occupied by CSI-RS resources corresponding to a set of spatial domain adaptation patterns.

In the embodiment of the present disclosure, according to the time window indicated by the network device or the time window determined by the terminal itself, the periodic or semi-persistent CSI-RS resources associated with the same reporting time can be determined.

In some embodiments, each spatial domain adaptation pattern associated with the same CSI report setting corresponds to an independent (or separate) CSI reporting quantity;
or, multiple spatial domain adaptation patterns associated with the same CSI report setting correspond to the same first CSI reporting quantity, and the multiple spatial domain adaptation patterns correspond to an independent second CSI reporting quantity.

In the embodiment of the present disclosure, when each spatial domain adaptation pattern associated with the same CSI report setting corresponds to an independent (or separate) CSI reporting quantity, different spatial domain adaptation patterns may be configured with different reporting quantities. For example, spatial domain adaptation type 1 is configured with PMI, while spatial domain adaptation type 2 may not be configured with PMI, which is beneficial to reducing configuration overhead.

When multiple spatial domain adaptation patterns associated with the same CSI report setting correspond to the same first CSI reporting quantity, and the multiple spatial domain adaptation patterns correspond to independent second CSI reporting quantities, the common reporting quantity (i.e., the first CSI reporting quantity) of the multiple spatial domain adaptation patterns may be uniformly configured without configuring each spatial domain adaptation pattern separately, thereby reducing configuration overhead.

In some embodiments, the spatial domain adaptation pattern information includes M spatial domain adaptation patterns among N spatial domain adaptation patterns configured by the network side device, where M≤N, and M and N are positive integers respectively;
the terminal measures the reference signal resource associated with the spatial domain adaptation indication information and reports the measurement result, including:
the terminal measures the reference signal resources associated with the M spatial domain adaptation patterns and reports M measurement results.

In the embodiment of the present disclosure, the terminal measures M spatial domain adaptation patterns among N spatial domain adaptation patterns according to the instruction of the network device and performs reporting, which can reduce CSI reporting overhead.

In some embodiments, the base station uses RRC signaling or dynamic signaling to indicate the M spatial domain adaptation patterns corresponding to the CSI reported by the terminal. Alternatively, the terminal itself determines the CSI that needs to be reported.

In some embodiments, the terminal reports M measurement results, including:
the terminal reports the first measurement result and measurement result relative information;
the first measurement result is a measurement result corresponding to the first spatial domain adaptation pattern among the M measurement results;
the measurement result relative information refers to relative information between the second measurement result and the first measurement result, and the relative information includes a difference or a relative value between a measurement value corresponding to the second measurement result and a measurement value corresponding to the first measurement result; the second measurement result is a measurement result corresponding to the second spatial domain adaptation pattern among the M measurement results.

For example, the terminal reports the CSI corresponding to the first spatial domain adaptation pattern, and feeds back relative information (such as a relative value) between the CSI corresponding to the second spatial domain adaptation pattern and the CSI corresponding to the first spatial domain adaptation pattern.

Here, by reporting the first measurement result and the measurement result relative information, the measurement result reporting overhead is further reduced.

The above-mentioned solution 2 is described below with reference to specific embodiments.
(1) The spatial domain adaptation pattern corresponds to the CSI-RS resource;
   the base station configures a spatial domain adaptation pattern/mode set (a set/group of spatial domain adaptation patterns/modes) for the UE using RRC signaling/dynamic signaling. In some embodiments, the protocol pre-determines that the adaptation pattern/mode group is associated with the first CSI-RS resource; in some embodiments, RRC signaling explicitly configures the first CSI-RS resource and the spatial domain adaptation pattern/mode group associated with the first CSI-RS resource;
   in some embodiments, the spatial domain adaptation pattern/mode index corresponding to the first CSI-RS resource is the lowest/highest value of the index in the above-mentioned set of spatial domain adaptation patterns/modes, or the CSI-RS resource is not associated with the spatial domain adaptation pattern/mode index, that is, the first resource is not included in the CSI-RS resources associated with the spatial domain adaptation pattern/mode; or the base station configures at least one periodic/semi-persistent CSI-RS resource for the UE (preferably, each CSI-RS resource may have different time domain resources or different frequency domain resources, or both different time domain resources and frequency domain resources), and each CSI-RS resource corresponds to a spatial domain adaptation pattern/mode. The above-mentioned set of spatial domain adaptation patterns/modes may be a spatial domain adaptation pattern/mode based on type 1 or type 2.
(2) Reporting time;
   The periodic/semi-persistent CSI-RS resource corresponding to at least one spatial domain adaptation pattern/mode is associated with the same reporting time.

More specifically, each spatial domain adaptation pattern/mode in the set is associated with a different CSI-RS resource (e.g., a CSI-RS resource with a different time domain position, preferably the CSI-RS resource is a periodic or semi-persistent CSI-RS resource) and at least one CSI-RS resource corresponding to the spatial domain adaptation pattern/mode set or subset within the spatial domain adaptation time window (i.e., the above-mentioned time window) is associated with a report setting, i.e., a CSI report setting (CSI-Report Config); the above-mentioned time window is preferably explicitly configured by the base station using RRC signaling/dynamic signaling. The base station may use high-layer signaling to configure the period and/or offset of the time window for periodic reporting. In some embodiments, the above-mentioned time window only includes CSI-RS resources corresponding to a part or subset of the set of spatial domain adaptation patterns/modes, then the CSI-ReportConfig is associated with the subset of the set of spatial domain adaptation patterns/modes, as shown in FIG. 5 (associated with four patterns of which the spatial domain adaptation pattern identifiers are 1, 2, 3 and 4, that is, associated with the set of spatial domain adaptation patterns), or, as shown in FIG. 6, associated with a subset of the set of spatial domain adaptation patterns. Alternatively, the above-mentioned time window is determined by the UE, and the position of the time window is the time period occupied by the CSI-RS resource corresponding to the spatial domain adaptation pattern/mode set, for example, the time length occupied by the actually transmitted CSI-RS resource corresponding to a set of spatial domain adaptation pattern/mode sets in the time domain, and the starting position offset may be used as an implicit configuration of the time window.

Preferably, for type 2 spatial domain adaptation, the first CSI-RS resource and at least one spatial domain adaptation pattern/mode associated therewith correspond to independent/separate CSI-RS resources, respectively. The above-mentioned CSI-RS resource set is associated with one CSI-ReportConfig or multiple CSI-ReportConfig, but multiple CSI-ReportConfig are reported in the same time unit. The time unit may preferably be a slot or N slots. The value of N may be predefined by the protocol or configured by high-level RRC signaling.

### (3) Report enhanced configuration;

(3.1) according to the previous description, at least one spatial domain indication information, such as a CSI-RS transmission resource corresponding to at least one spatial domain adaptation pattern/mode, may be associated with a report setting, i.e., a CSI-ReportConfig;
each spatial domain adaptation pattern/mode is independently/separately configured with the CSI reporting quantity. For example, it includes at least a spatial domain adaptation indicator, a spatial domain adaptation indicator (SAI), codebook information, and frequency domain information related to the reporting quantity, such as one of the subband/wideband information. The spatial domain adaptation indicator is preferably spatial domain adaptation pattern/mode identification information such as index information, and the frequency domain information refers to the broadband or subband reporting configuration associated with the PMI and CQI reporting.

The beneficial effect of this method is that different spatial domain adaptation patterns/modes can be configured with different reporting quantities. For example, SAP0 can be configured with PMI, while SAP1 may not be configured with PMI, which is conducive to reducing overhead. SAP0 can be configured with broadband reporting, and SAP1 can be configured with subband reporting to adaptively match different antenna shutdown modes.

Specifically, an example of a related signaling for configuring the CSI reporting quantity is as follows:

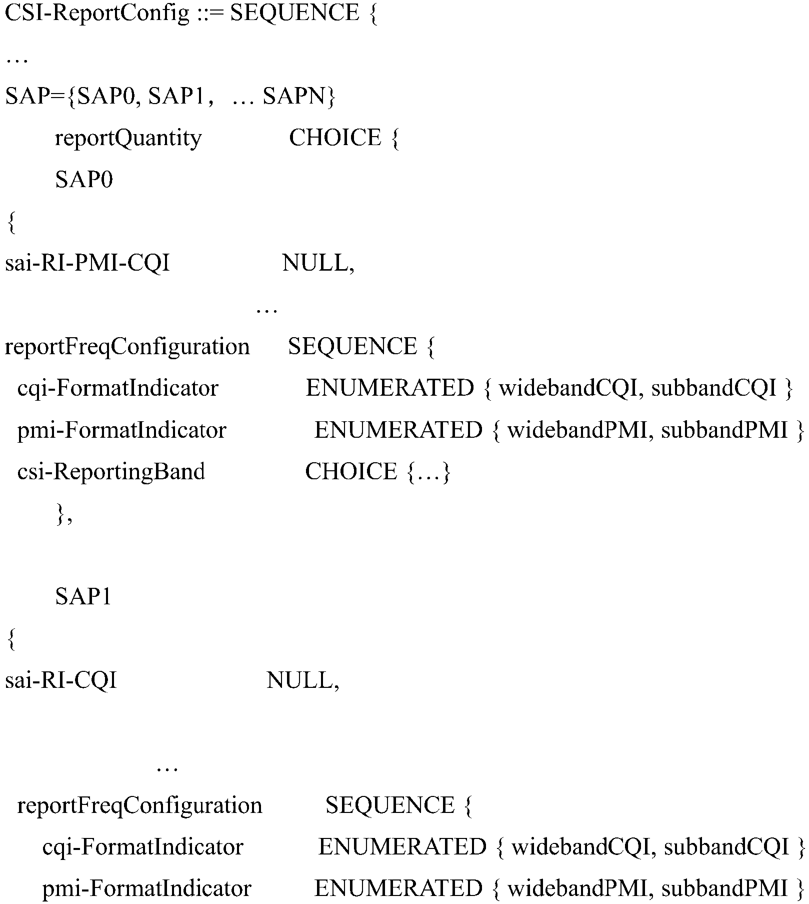

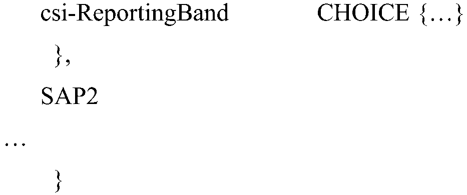

(3.2) In some embodiments, multiple spatial domain adaptation patterns/modes associated with one reportconfig are jointly configured with a common first reporting quantity (i.e., the above-mentioned first CSI reporting quantity) and independently configured with a second reporting quantity (i.e., the above-mentioned second CSI reporting quantity). The first reporting quantity includes precoding matrix indicator (PMI), L1 reference signal received power (Layer 1 reference signal received power, L1-RSRP), L1 signal-to-noise and interference ratio (Layer 1 signal-to-noise and interference ratio, L1-SINR), etc. The second reporting quantity includes SAI, channel quality indicator (CQI), broadband, subband indication information, rank indication (RI), layer indicator (LI), etc.

The beneficial effect of this solution is that it can identify the reporting quantity of the common configuration and report it centrally to reduce the PUCCH overhead. This solution is beneficial to the type 2 spatial domain adaptation solution because type 2 spatial domain adaptation only changes the beam width of the spatial domain beamforming and does not change the optimal beam direction. A common PMI may be used. Preferably, it may be agreed through a protocol that a common PMI may be used for all spatial domain adaptation patterns/modes based on the second spatial domain adaptation (type 2 SA).

Specifically, an example of a related signaling for configuring the first reporting quantity and the second reporting quantity is as follows:

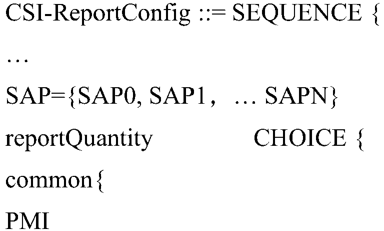

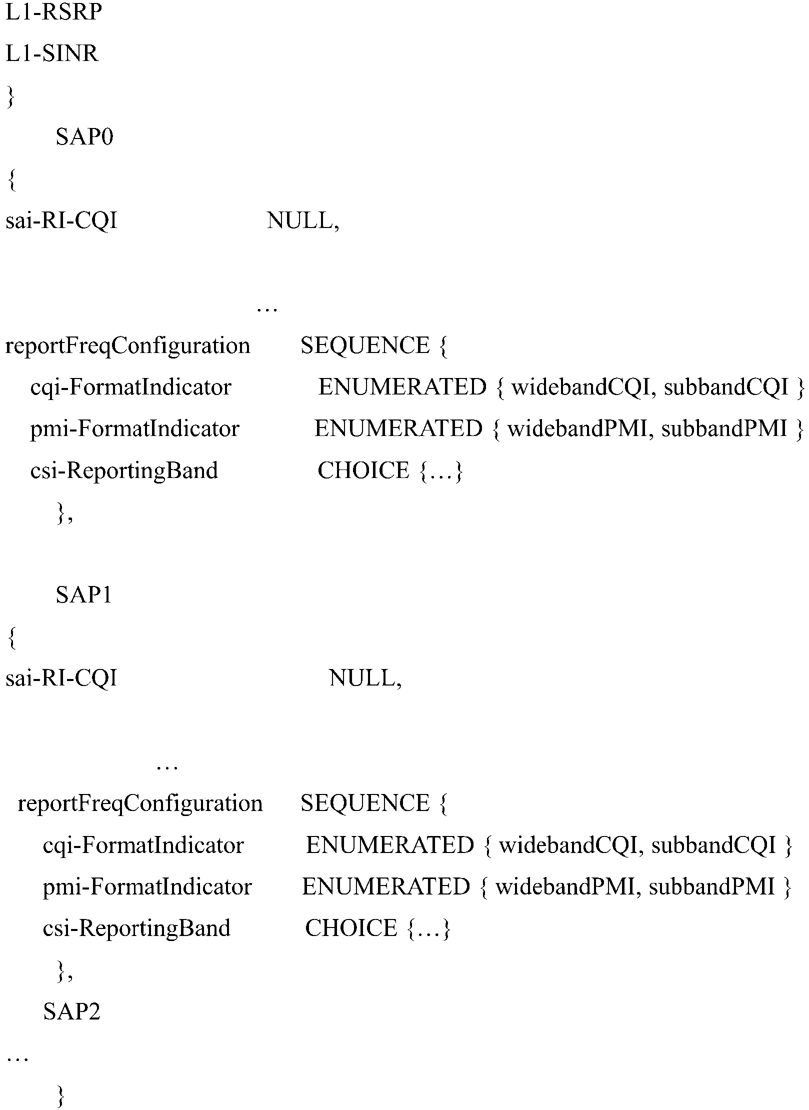

(3.3) In some embodiments, the base station configures N spatial domain adaptation patterns/modes using RRC signaling, and the base station indicates the M spatial domain adaptation patterns/modes corresponding to the CSI that the UE needs to report in one CSI ReportConfig/multiple CSI ReportConfigs using RRC signaling or dynamic signaling, where M≤N, and M and N are positive integers.

In some embodiments, the base station configures N spatial domain adaptation patterns/modes using RRC signaling, and the base station uses RRC signaling and/or dynamic signaling to indicate the number of sub CSIs that the UE needs to report in one CSI-Report Config/multiple CSI-Report Configs or the number M of sub-CSI reports associated with the CSI-Report Config, where each sub CSI is associated with one spatial domain adaptation pattern/mode. Alternatively, the UE determines the M sub CSIs that need to be reported according to the base station configuration, and selects M spatial domain adaptation patterns/modes from the N spatial domain adaptation patterns/modes to report the corresponding CSIs, which depends on the UE implementation.

It is optimal for the UE to determine the CSI that needs to be reported. However, if the base station uses signaling to configure at least one CSI that needs to be reported, it is beneficial for the base station to obtain the best reporting from the perspective of network energy saving, because the base station obtains reporting information related to multiple UEs, rather than the best reporting of a single UE.

(3.4) When a UE reports M CSIs associated with a set of spatial domain adaptation patterns/modes, it is preferred that the UE feeds back the CSI corresponding to the first spatial domain adaptation pattern/mode or the first CSI-RS resource, and the UE feeds back the relative value between the CSI corresponding to the second spatial domain adaptation pattern/mode and the CSI corresponding to the first spatial domain adaptation pattern/mode. Preferably, the base station uses RRC signaling to configure the first spatial domain adaptation pattern/mode or the first CSI-RS resource that requires feedback of complete CSI. In some embodiments, the UE itself determines the first spatial domain adaptation pattern/mode or the first CSI-RS resource.

Solution 3: Update of spatial domain adaptation and/or power domain adaptation.

In some embodiments of the present disclosure, the method further includes:
the terminal obtaining second indication information, where the second indication information includes at least one of spatial domain adaptation update information and power domain adaptation update information;
the terminal reporting channel state information CSI or stopping reporting the CSI according to the second indication information.

In the embodiment of the present disclosure, the spatial domain adaptation information and/or the power adaptation information may be updated through the above-mentioned second indication information.

In some embodiments, the terminal obtains the spatial domain adaptation update information, including:
obtaining the spatial domain adaptation update information through first dynamic signaling, where the first dynamic signaling includes first downlink control information (DCI) or a first media access control control element (MAC CE).

In some embodiments, the spatial domain adaptation update information includes at least one of the following:
spatial domain adaptation activation information or spatial domain adaptation deactivation information;
subset information of the set of spatial domain adaptation patterns.

The spatial domain adaptation information may be activated or deactivated through the above-mentioned spatial domain adaptation update information, thereby determining whether to report CSI.

In some embodiments, the first DCI satisfies at least one of the following:
scrambled with a first radio network temporary identity (RNTI), where the first RNTI includes an RNTI dedicated to network energy saving, an RNTI dedicated to spatial domain energy saving, or an RNTI dedicated to spatial domain energy saving and power domain energy saving; that is, the spatial domain adaptation update information may be determined by the scrambled DCI of the first DCI;
the first DCI includes DCI format 0_1 or DCI format 0_2;
a first field of the first DCI carries spatial domain adaptation update information or non-spatial domain adaptation update information; for example, the first field may be a CSI request field; through the first field, the terminal may determine that the first DCI indicates spatial domain adaptation update information or non-spatial domain adaptation update information;
a first predefined code point (or a first predefined field) of the first DCI is associated with verification information of the spatial domain adaptation activation information; for example, the first predefined field includes: a Hybrid Automatic Repeat reQuest (HARQ) process number field and a Redundancy Version (RV) field; that is, the spatial domain adaptation activation information may be verified by the first predefined code point to determine whether the spatial domain adaptation activation information is valid activation information;
a second predefined code point (or a second predefined field) of the first DCI is associated with verification information of the spatial domain adaptation deactivation information; for example, the second predefined field includes: a HARQ process number field, a modulation and coding scheme (MCS) field, a resource block assignment field, and a redundancy version field; that is, the second predefined code point may be used to verify the spatial domain adaptation deactivation information to determine whether the spatial domain adaptation deactivation information is valid deactivation information;
the second field of the first DCI is used to indicate whether spatial domain adaptation is supported. The second field may be a newly added field, such as a spatial domain adaptation indicator field, which uses two 1-bit code points to indicate whether spatial domain adaptation is supported or not. In the embodiment of the present disclosure, the terminal detects the DCI scrambled by the first RNTI, and further detects the verification information. If the verification information also passes the verification, the terminal performs relevant operations according to the instructions of the spatial domain adaptation activation or deactivation indication information.

In some embodiments, the code point carried by the first field corresponds to different trigger states, each trigger state is associated with at least one CSI report setting, and each CSI report setting is associated with at least one spatial domain adaptation pattern.

Here, the associated spatial domain adaptation pattern may be determined by the trigger state corresponding to the code point carried by the first field.

In some embodiments, when the CSI report setting associated with the first field belongs to a first CSI report setting set, the first field is used to indicate activation information associated with the spatial domain adaptation or deactivation information associated with the spatial domain adaptation;
alternatively, when the CSI report setting associated with the first field belongs to the second CSI report setting set, the first field is used to indicate deactivation information of semi-persistent reporting associated with non-spatial domain adaptation (which may also be described as semi-persistent reporting unrelated to spatial domain adaptation) or activation information of semi-persistent reporting associated with non-spatial domain adaptation;
alternatively, when the CSI-RS resource associated with the first field belongs to a first CSI-RS resource set, the first field is used to indicate activation information associated with spatial domain adaptation or deactivation information associated with spatial domain adaptation;
alternatively, when the CSI-RS resource associated with the first field belongs to the second CSI-RS resource set, the first field is used to indicate semi-persistent reporting deactivation information associated with non-spatial domain adaptation or semi-persistent reporting activation information associated with non-spatial domain adaptation.

In the embodiment of the present disclosure, the base station side divides the CSI-ReportConfig (CSI report setting) identifier (ID) into two subsets (i.e., the first CSI report setting set and the second CSI report setting set), and uses RRC signaling to configure for the UE. The first CSI-ReportConfig set corresponds to spatial domain adaptation activation/deactivation, and the second CSI-ReportConfig set corresponds to non-spatial domain adaptation activation/deactivation.

Through the relationship between the CSI report setting associated with the first field and the two CSI report setting sets, it may be implicitly determined whether the first field is used to indicate activation information associated with the spatial domain adaptation or deactivation information associated with the spatial domain adaptation, or to indicate semi-persistent reporting deactivation information associated with the non-spatial domain adaptation or semi-persistent reporting activation information associated with the non-spatial domain adaptation;
alternatively, through the relationship between the CSI-RS resource associated with the first field and the two CSI-RS resource sets, it may be determined whether the first field is used to indicate activation information associated with spatial domain adaptation or deactivation information associated with spatial domain adaptation, or to indicate semi-persistent reporting deactivation information associated with non-spatial domain adaptation or semi-persistent reporting activation information associated with non-spatial domain adaptation.

In some embodiments, the terminal obtains the information and/or corresponding functions of the above two sets according to RRC signaling configuration or protocol agreement.

In some embodiments, the terminal reports channel state information CSI or stops reporting CSI according to the spatial domain adaptation update information, including:
when the trigger state indicated by the first DCI belongs to a first trigger state set or the trigger state indicated by the first DCI is associated with a third CSI-RS resource set, the terminal performs aperiodic CSI reporting related to spatial domain adaptation; and/or, when the trigger state indicated by the first DCI belongs to a second trigger state set or the trigger state indicated by the first DCI is associated with a fourth CSI-RS resource set, the terminal performs aperiodic CSI reporting related to non-spatial domain adaptation, the first trigger state set and the second trigger state set are two different trigger state sets (configured by the network or agreed upon by the protocol), and the third CSI-RS resource set and the fourth CSI-RS resource set are two different CSI-RS resource sets (configured by the network or agreed upon by the protocol);
alternatively, when the third field or the target bit in the first DCI indicates aperiodic CSI reporting related to spatial domain adaptation, the terminal performs aperiodic CSI reporting related to spatial domain adaptation; and/or, when the third field or the target bit in the first DCI indicates aperiodic CSI reporting related to non-spatial domain adaptation, the terminal performs aperiodic CSI reporting related to non-spatial domain adaptation.

Here, the corresponding terminal operation may be implicitly determined by the relationship between the trigger state indicated by the DCI and the trigger state set, or the relationship between the trigger state indicated by the DCI and the CSI-RS resource set.

In some embodiments, at least one spatial domain adaptation pattern is associated with at least one periodic CSI-RS resource and at least one periodic CSI report setting;
the terminal reports channel state information CSI or stops reporting CSI according to the spatial domain adaptation update information, including:
reporting CSI in a first resource according to the spatial domain adaptation activation information; or stopping reporting CSI in the first resource according to the spatial domain adaptation deactivation information; where the first resource is a resource corresponding to the periodic CSI report setting;
and/or, according to the spatial domain adaptation activation information, reporting CSI in the second resource; or, according to the spatial domain adaptation deactivation information, stopping reporting CSI in the second resource, where the second resource is the resource corresponding to the periodic CSI report setting associated with the subset information of the set of spatial domain adaptation patterns.

In an embodiment of the present disclosure, when at least one spatial domain adaptation pattern is associated with at least one periodic CSI-RS resource and at least one periodic CSI report setting, the resource corresponding to the periodic CSI report setting may be used as CSI reporting resource, or the resource corresponding to the periodic CSI report setting associated with the subset information of the set of adaptation patterns may be determined as reporting resource.

In some embodiments, at least one spatial domain adaptation pattern is associated with at least one periodic CSI-RS resource or semi-persistent CSI-RS resource, and at least one spatial domain adaptation pattern is associated with at least one semi-persistent CSI report setting;
the terminal reports channel state information CSI or stops reporting CSI according to the spatial domain adaptation update information, including:
according to the spatial domain adaptation activation information, activating semi-persistent CSI reporting on a third resource, or deactivating semi-persistent CSI reporting on the third resource, where the third resource is a resource corresponding to the semi-persistent CSI report setting associated with the subset information of the set of spatial domain adaptation patterns.

In an embodiment of the present disclosure, for a case where at least one spatial domain adaptation pattern is associated with at least one periodic CSI-RS resource or semi-persistent CSI-RS resource, and the at least one spatial domain adaptation pattern is associated with at least one semi-persistent CSI report setting, the resource corresponding to the semi-persistent CSI report setting associated with the subset information of the set of spatial domain adaptation patterns may be determined as CSI reporting resource.

In some embodiments, at least one spatial domain adaptation pattern is associated with at least one periodic CSI-RS resource, semi-persistent CSI-RS resource, or aperiodic CSI-RS resource, and the at least one spatial domain adaptation pattern is associated with at least one aperiodic CSI report setting;
the terminal reports channel state information CSI according to the spatial domain adaptation update information, including:
according to the spatial domain adaptation update information, performing aperiodic CSI reporting on a fourth resource, where the fourth resource is a resource corresponding to the aperiodic CSI report setting associated with the subset information of the spatial domain adaptation pattern set.

In an embodiment of the present disclosure, for a case where at least one spatial domain adaptation pattern is associated with at least one periodic CSI-RS resource, semi-persistent CSI-RS resource or aperiodic CSI-RS resource, and the at least one spatial domain adaptation pattern is associated with at least one aperiodic CSI report setting, the resource corresponding to the aperiodic CSI report setting associated with the subset information of the spatial domain adaptation pattern set may be determined as CSI reporting resource.

In some embodiments, the power domain adaptation update information is associated with the first set or the second set;
the first set is a subset of the first power offset value set, and the second set is a subset of the second power offset value set;
the first power offset value set is a set of CSI-RS and physical downlink shared channel (PDSCH) power offset values, and the second power offset value set is a set of SSB and CSI-RS power offset values.

In some embodiments, the power domain adaptation update information includes:
power domain network energy saving activation information or power domain network energy saving deactivation information, or power domain network energy saving aperiodic reporting triggering information.

Through the power domain network energy saving activation information or the power domain network energy saving deactivation information or the power domain network energy saving aperiodic reporting triggering information, the terminal may be triggered to report CSI or stop reporting CSI.

In some embodiments, the power domain adaptation update information is associated with a subset of the first power offset value set or a subset of the second power offset value set.

In some embodiments, the terminal obtains power domain adaptation update information, including:
obtaining the power domain adaptation update information through second dynamic signaling, where the second dynamic signaling includes second downlink control information DCI or a second media access control control element MAC CE.

In some embodiments, the second DCI satisfies at least one of the following:
scrambled with a second radio network temporary identity (RNTI), where the second RNTI includes an RNTI dedicated to power domain network energy saving, or an RNTI dedicated to spatial domain and power domain energy saving;
the second DCI includes DCI format 0_1 or DCI format 0_2;
code points carried by the second DCI correspond to different trigger states, each trigger state is associated with at least one CSI report setting, and each CSI report setting is associated with at least one power domain adaptation pattern;

a fourth field in the second DCI carries the power domain adaptation update information or the spatial domain adaptation update information; the fourth field may be an existing field in the DCI, such as a CSI request field, or a newly added field; in some embodiments, the position of the field in the DCI may be configured for the UE through RRC signaling; in some embodiments, the code points/bit sets respectively corresponding to the power domain adaptation and/or spatial domain adaptation indicators may be configured through RRC signaling, for example, the first code point or bit set is used to indicate spatial domain adaptation activation/deactivation information, and the second code point or bit set is used to indicate power domain activation or deactivation information;
a third predefined code point (or the third predefined code point field) of the second DCI is associated with the verification information of the power domain network energy saving activation information;
a fourth predefined code point (the fourth predefined field) of the second DCI is associated with the verification information of the power domain network energy saving deactivation information;
a target indicator field of the second DCI is used to indicate that information carried by the fourth field is power domain adaptation update information or spatial domain adaptation update information.

In the embodiment of the present disclosure, the terminal detects the DCI scrambled by the power domain RNTI and further detects the verification information. If the verification information also passes the verification, the terminal performs relevant operations according to the instructions of the power domain (or power domain energy saving) activation or deactivation indication information.

After successfully receiving the power domain activation or deactivation information, the terminal feeds back the corresponding CSI. If the UE receives power domain deactivation signaling, it stops measuring and feeding back the corresponding CSI according to the instruction of the deactivation signaling.

In some embodiments, the terminal reports channel state information CSI or stops reporting CSI according to the power domain adaptation update information, including:
the terminal performs CSI reporting according to the power domain network energy saving activation information or the power domain network energy saving aperiodic reporting triggering information;
alternatively, the terminal stops CSI reporting according to the power domain network energy saving deactivation information.

In the embodiment of the present disclosure, the terminal determines whether CSI reporting is required based on the power domain network energy saving activation information or deactivation information.

The above-mentioned solution 3 is described below with reference to specific embodiments.

### Embodiment 1: Dynamic signaling updating the spatial domain adaptation signaling mechanism:

The base station uses dynamic signaling DCI or MAC CE to indicate the spatial domain adaptation update information:

### Implementation 1:

1) The base station side configures a set of spatial domain adaptation patterns/modes for the UE using RRC signaling. The above at least one spatial domain adaptation pattern/mode is associated with at least one periodic CSI-RS resource and at least one periodic CSI report setting.
2) The base station side uses dynamic signaling DCI or MAC-CE to send the spatial domain adaptation update indicator. In some embodiments, the spatial domain adaptation update indicator may include spatial domain adaptation activation/deactivation information and/or a subset of the spatial domain adaptation pattern/mode group.
3) The UE receives the spatial domain adaptation update information carried by the dynamic signaling;
   3.1) After receiving the spatial domain adaptation activation information carried by the spatial domain adaptation update indicator, the UE may report the CSI in the corresponding PUSCH/PUCCH according to the configuration of the periodic CSI report setting. If the spatial domain adaptation information also carries "subset information of the spatial domain adaptation pattern/mode group", the UE needs to report CSI in the corresponding PUSCH/PUCCH according to the configuration of the periodic CSI report setting associated with the "subset information of the spatial domain adaptation pattern/mode group".
   3.2) After receiving the "spatial domain adaptation deactivation information" carried in the spatial domain adaptation update indicator, the UE may stop reporting CSI in the PUSCH/PUCCH corresponding to the periodic CSI report setting. If the spatial domain adaptation information also carries "subset information of the spatial domain adaptation pattern/mode group", the UE needs to stop reporting CSI in the PUSCH/PUCCH corresponding to the periodic CSI report setting associated with the "subset information of the spatial domain adaptation pattern/mode group".

### Implementation 2:

1) The base station side uses RRC signaling to configure a set of spatial domain adaptation patterns/modes for the UE. The above at least one spatial domain adaptation pattern/mode is associated with at least one periodic/semi-persistent CSI-RS resource and at least one semi-persistent CSI report setting.
2) The base station side uses dynamic signaling DCI or MAC-CE to send spatial domain adaptation update information. In some embodiments, the spatial domain adaptation update information preferably includes spatial domain adaptation activation/deactivation information.
3) The UE receives the spatial domain adaptation update information carried by the dynamic signaling;
   3.1) After the UE receives the spatial domain adaptation update information carrying the "spatial domain adaptation activation information", the UE may activate semi-persistent CSI reporting on the PUCCH/PUSCH corresponding to the CSI report setting associated with the "subset information of the spatial domain adaptation pattern/mode group" corresponding to the spatial domain adaptation activation information.
   3.2) After receiving the spatial domain adaptation update information carrying the "spatial domain adaptation deactivation information", the UE deactivates semi-persistent CSI reporting on the PUCCH/PUSCH corresponding to the CSI report setting associated with the "subset information of the spatial domain adaptation pattern/mode group" corresponding to the activation signaling in 3.1).

### Implementation 3:

1) The base station side uses RRC signaling to configure a set of spatial domain adaptation patterns/modes for the UE. The above at least one spatial domain adaptation pattern/mode is associated with at least one periodic/semi-persistent/aperiodic CSI-RS resource and at least one aperiodic CSI report setting.
2) The base station side uses dynamic signaling DCI to send spatial domain adaptation update information. In some embodiments, the spatial domain adaptation update information may include spatial domain adaptation activation/deactivation information.
3) The UE receives the spatial domain adaptation update information carried in the dynamic signaling.
   3.1) After receiving the spatial domain adaptation update information carrying the "spatial domain adaptation update information", the UE may perform a one-time aperiodic CSI reporting on the PUSCH corresponding to the CSI report setting associated with the "subset information of the spatial domain adaptation pattern/mode group" corresponding to the spatial domain adaptation information.

### Embodiment 2: Activation/deactivation mechanism

As described in embodiment 1, a DCI-based spatial domain adaptation update mechanism, the base station may trigger the first update operation of spatial domain adaptation through dynamic activation and/or deactivation signaling, or the base station may trigger the second update operation of spatial domain adaptation information through dynamic signaling. Preferably, the first update operation may correspond to semi-persistent measurement/reporting, and the second update operation may correspond to aperiodic measurement/reporting. The specific design implementation is described below.

### Implementation 1:

A spatial domain adaptation activation/deactivation mechanism based on dynamic signaling (DCI), where the DCI (i.e., the first DCI) satisfies at least one of the following:
a. The DCI is scrambled with an RNTI dedicated to network energy saving or an RNTI dedicated to spatial domain energy saving, or an RNTI dedicated to spatial domain and power domain energy saving, such as network energy saving RNTI (NES-RNTI) or spatial domain adaptation RNTI (SA-RNTI), spatial domain adaptation pattern RNTI (SAP-RNTI), spatial domain adaptation mode RNTI (SAM-RNTI). It should be noted that the above RNTI is only an example and does not exclude other specific implementations. The base station configures the RNTI dedicated to network energy saving for the UE using high-layer signaling;
b. The DCI preferably includes at least DCI formats 0_1 and 0_2. The DCI does not exclude other DCI formats and may be a scheduled DCI or a non-scheduled DCI.
c. The spatial domain adaptation update information carried by the spatial domain adaptation activation signaling is carried through the CSI request field of the DCI. The code points carried by the CSI request field in the DCI correspond to different trigger states. Each trigger state may be associated with at least one CSI-ReportConfig, and each CSI-ReportConfig is associated with at least one spatial domain adaptation pattern/mode.
d. For the activation signaling and deactivation signaling verification information corresponding to the predefined field and predefined code point value of DCI respectively, an example is described as follows: when the information value carried by DCI meets the constraints of Table 1, the activation DCI is valid activation signaling; if the information value carried by DCI meets the constraints of Table 2, the activation DCI is valid deactivation signaling.

**Table 1**

| | DCI format 0_1/0_2 |
|---|---|
| Number of HARQ processes | set to all '0's |
| RV | set to all '0's |

**Table 2**

| | DCI format 0_1/0_2 |
|---|---|
| Number of HARQ processes | set to all '0's |
| MCS | set to all '1's |
| Resource block allocation | If only RA type 0 is configured for the upper layer, set to all '0's; |
| | If only RA type 1 is configured for the upper layer, set to all '1's; |
| | If dynamic switching is configured for the upper layer between RA type 0 and RA type 1, if MSB is '0', set to all '0's; otherwise, set to all '1's; |
| | For DCI 0_1, if RA type 2 is configured for the upper layer, if µ=0, set to all '1's; if µ=1, set to all '0's |
| RV | set to all '0's |

### Implementation 2:

A spatial domain adaptation activation/deactivation mechanism based on dynamic signaling (DCI), where the DCI (i.e., the first DCI) satisfies at least one of the following:
a. The DCI preferably includes at least DCI format 0_1, 0_2, and the DCI is scrambled with semi-persistent CSI RNTI (SP-CSI-RNTI).
b. A new spatial domain adaptation indicator field is added for DCI, for example, two 1-bit code points are respectively used to indicate whether spatial domain adaptation is supported or not.

In this implementation, if the spatial domain adaptation indicator field received by the UE is the first bit, it means that the CSI request field carries the spatial domain adaptation activation/deactivation indication information; if the spatial domain adaptation indicator field is the second bit, it means that the CSI request field carries the non-spatial domain adaptation semi-persistent CSI report activation/deactivation indication information.

Rel-18 UE supports spatial domain adaptation and non-spatial domain adaptation CSI report activation/deactivation according to base station DCI indicator.

### Implementation 3:

1) The base station side divides the CSI-ReportConfig ID (or CSI-RS resource set) into two subsets and configures them for the UE using RRC signaling.
2) The first CSI-ReportConfig set is associated with spatial domain adaptation activation/deactivation operation, and the second CSI-ReportConfig set is associated with non-spatial domain adaptation activation/deactivation operation (or the first CSI-RS resource set is associated with spatial domain adaptation activation/deactivation operation, and the second CSI-RS resource set is associated with non-spatial domain adaptation activation/deactivation). Non-spatial domain adaptation here means that spatial domain adaptation is not supported, such as legacy Rel-15, Rel-16, and Rel-17 spatial domain multiplexing. The UE obtains the information and/or corresponding functions of the two subsets according to the base station RRC signaling configuration or using a protocol agreed method.
3) The UE detects the CSI request field carried by the DCI. If the CSI-Report Config associated with the CSI request field belongs to the first CSI-Report Config subset, the CSI request field is used to indicate spatial domain adaptation activation/deactivation; if the CSI-Report Config associated with the CSI request field belongs to the second CSI-Report Config subset, the CSI request field is used to indicate non-spatial domain adaptation activation/deactivation (or normal/legacy R15/R16/R17 spatial domain activation/deactivation).

Alternatively, if the CSI-RS resource associated with the CSI request field belongs to the first CSI-RS resource set, the CSI request field is used to indicate spatial domain adaptation activation/deactivation; if the CSI-RS resource associated with the CSI request field belongs to the second CSI-RS resource set, the CSI request field is used to indicate non-spatial domain adaptation activation/deactivation (or normal/legacy R15/R16/R17 spatial domain activation/deactivation).

### Implementation 4:

The above implementations 1-3 describe the dynamic activation / deactivation mechanism corresponding to the first update operation. For only dynamic signaling is for spatial domain adaptation update indicator (at least there is no deactivation signaling, and the dynamic trigger signaling is different from the dynamic activation signaling), the following mechanism may be used. When the dynamic signaling DCI indicates the second spatial domain adaptation update, in some embodiments:

The base station uses RRC signaling to configure the first trigger state set or configure the first trigger state set and the second trigger state set for the UE, where the first trigger state set is associated with the first measurement/reporting set, i.e., the spatial domain adaptation pattern/mode set, and the second trigger state set is associated with the second measurement/reporting set, i.e., the non-spatial domain adaptation aperiodic CSI-RS resource/reporting set, corresponding to the legacy R15/R16/R17 aperiodic measurement and reporting that is not related to spatial domain adaptation. The UE determines whether to perform spatial domain adaptation or aperiodic reporting unrelated to spatial domain adaptation based on which set the trigger state indicated by the dynamic signaling belongs to. More specifically, if the trigger state belongs to the first trigger state set, the UE performs aperiodic reporting related to spatial domain adaptation (the first CSI measurement/reporting), otherwise, performs legacy aperiodic CSI measurement/reporting (the second CSI measurement/reporting).

Alternatively, the base station uses RRC signaling to configure a first CSI-RS resource set/CSI reporting set and/or to configure a second CSI-RS resource set/CSI reporting set for the UE, where the first CSI-RS resource set/CSI reporting set is associated with a first measurement/reporting set, i.e., a spatial domain adaptation pattern/mode set, and the second CSI-RS resource set/CSI reporting set is associated with a second measurement/reporting set, i.e., a aperiodic measurement/reporting operation unrelated to spatial domain adaptation, such as legacy R15/R16/R17 aperiodic measurement and reporting unrelated to spatial domain adaptation. If the UE associates the first CSI-RS resource set/CSI reporting set according to the trigger state indicated by the dynamic signaling, it performs spatial domain adaptation related aperiodic reporting (the first CSI measurement/reporting), otherwise performs legacy aperiodic CSI measurement/reporting (the second CSI measurement/reporting).

In some embodiments, the protocol stipulates that 1 bit is added to the scheduling DCI to indicate whether the CSI request field carries spatial domain adaptation related aperiodic CSI measurement/reporting (first CSI measurement/reporting) indication information or legacy aperiodic CSI measurement/reporting (second CSI measurement/reporting) indication information. The UE determines whether to perform the first CSI measurement/reporting or the second CSI measurement/reporting based on the newly added DCI 1 bit and the CSI request field.

In some embodiments, the protocol stipulates that a new field is added to the DCI to indicate spatial domain adaptation related aperiodic CSI measurement/reporting (first CSI measurement/reporting), that is, the first field indicates spatial domain adaptation related measurement/reporting; and the CSI request field is used to indicate legacy aperiodic CSI measurement/reporting.

### Embodiment 3: Power domain network energy saving solution.

In principle, the solution of the embodiment 2 may also be applied to the power domain network energy saving solution. Specifically:
1) The base station uses RRC signaling to configure, for a CSI-RS resource (preferably a periodic/semi-persistent CSI-RS resource) or a spatial domain/power domain adaptation pattern/mode associated with a CSI resource, N≥1 CSI-RS and PDSCH power offset value sets, i.e., the above-mentioned first power offset value set: {powerControlOffset_1, powerControlOffset_2, ...powerControlOffset_N}, or N≥1 SSB and CSI-RS power offset value sets, i.e., the above-mentioned second power offset value set: {powerControlOffsetSS_1, powerControlOffsetSS_2, ...powerControlOffsetSS_N}.
2) The base station sends DCI/MAC-CE-based power domain network energy saving activation/deactivation signaling, where the power adaptation update information includes power domain network energy saving activation/deactivation information, and preferably the power adaptation update information is associated with a subset of the first power bias value set or a subset of the second power bias value set configured in the previous step.

### Implementation 1:

2.1) DCI is scrambled with an RNTI dedicated to network energy saving or an RNTI dedicated to power domain network energy saving (optimal solution), or an RNTI dedicated to spatial domain and power domain network energy saving, such as NES-RNTI or Power Domain Adaptation RNTI (PA-RNTI) or SPA-RNTI. The above RNTI is just an example and other specific implementations are not excluded. The base station configures the RNTI dedicated to network energy saving for the UE by using high-layer signaling.
2.2) The DCI preferably includes at least DCI formats 0_1 and 0_2, although other DCI formats are not excluded. The DCI may be a scheduled DCI or a non-scheduled DCI.
2.3.1) The power domain adaptation activation/deactivation information carried in the power adaptation update information is implemented by reusing an existing field in the DCI, for example, reusing the CSI request field to carry it. Preferably, if an RNTI dedicated to power domain network energy saving is used in step 2.1), the power domain network energy saving activation/deactivation signaling may reuse the code point carried by the CSI request field in the UL grant DCI, corresponding to different trigger states, each trigger state may be associated with at least one CSI-ReportConfig, and each CSI-ReportConfig is associated with at least one power adaptation information, i.e., a power bias value or a power bias value subset, and the power bias may be powerControlOffsetSS (i.e., an offset of the CSI-RS transmission power relative to the synchronization signal block ss-PBCH-Block power) or powerControlOffset (i.e., a power offset of the non-zero power NZP CSI-RS RE to the PDSCH RE.).
2.3.2 In addition to reusing the CSI request field to indicate the power domain activation/deactivation indicator as described in 2.3.1, in some embodiments, a new field is added to the DCI to carry the power domain activation/deactivation indication information. For example, a new spatial domain and power domain adaptation information indicator field is added to the DCI, and the base station explicitly/implicitly configures at least one code point/bit set for the UE through RRC signaling. The RRC signaling configures, for the UE, the position of the field in the DCI and the code point/bit set respectively corresponding to the power domain or the power domain and spatial domain adaptation indicator. Preferably, two code point/bit sets A and B are configured, where the first code point/bit set is used to indicate spatial domain adaptation indication information, such as spatial domain adaptation activation/deactivation information, and the second code point/bit set is used to indicate power domain adaptation indication information, such as power domain adaptation activation/deactivation information. Table 3 as below gives an example corresponding to two bit sets.

**Table 3**

| | |
|---|---|
| spatial domain adaptation indicator | power domain adaptation indicator |

2.4) The verification information of the power domain activation information/deactivation information respectively corresponds to the predefined field and predefined code point value of the DCI, which may be similar to Table 1 and Table 2 and may not be repeated here.
2.5) After the UE detects the DCI scrambled with the power domain RNTI, in some embodiments, the UE further detects the verification field. If the verification field also passes the verification, the UE further parses the activation/deactivation signaling according to the indication of the relevant field of the power domain activation/deactivation information indicator.
2.6) After successfully receiving the power domain dynamic activation signaling, the UE feeds back the corresponding CSI according to the instruction of the dynamic activation signaling. If the UE receives the power domain dynamic deactivation signaling, the UE stops measuring and feeding back the corresponding CSI according to the instruction of the deactivation signaling.

In some embodiments, the spatial domain/power domain adaptation update information may be sent during the DRX non-activation period, which corresponds to non-scheduled DCI. In some embodiments, it needs to be scrambled with a network energy saving related dedicated RNTI; when the dynamic signaling carrying the spatial domain adaptation update information is sent during the activation period, it may be a scheduled DCI or a non-scheduled DCI or a MAC-CE.

It should be noted that, in the embodiments of the present disclosure, for spatial domain adaptation or power domain adaptation of dynamic signaling, activation/deactivation (corresponding to semi-persistent reporting) dynamic signaling may be terminal specific (UE specific) signaling, group common signaling or cell specific signaling. For spatial domain adaptation or power adaptation based on dynamic signaling, the dynamic trigger signaling (corresponding to aperiodic reporting) is, in some embodiments, UE specific signaling, group common signaling or cell specific signaling.

The above-mentioned solutions of the embodiments of the present disclosure first provide methods of type 2 spatial domain adaptation indicator and combined type 1 and type 2 spatial domain adaptation indicator. Then, for the above-mentioned spatial domain adaptation indicator, the following proposals are proposed: spatial domain adaptation time domain reporting time enhancement, reporting quantity and reporting configuration method enhancement and reporting overhead compression scheme; for the spatial domain adaptation indicator, relevant technical enhancement schemes of spatial domain or power domain adaptation activation and deactivation mechanism based on dynamic signaling are further proposed. The proposed spatial domain energy saving technology can effectively support type 1 and type 2 NES energy saving configurations and reduce feedback overhead. The proposed spatial domain or power domain adaptation activation and deactivation mechanism based on dynamic signaling can be compatible with related technologies to achieve more flexible MIMO transmission and spatial domain energy saving.

As shown in FIG. 7, embodiments of the present disclosure further provide an information transmission method, including:
Step 701: a network side device sending first indication information, where the first indication information includes spatial domain adaptation indication information and/or power domain adaptation indication information.

In some embodiments, the spatial domain adaptation indication information is associated with a reference signal resource, and the power domain adaptation indication information is associated with a reference signal resource. The spatial domain adaptation information may also be described as spatial domain antenna element adaptation indication information or spatial domain indication information. The reference signal resource may be a CSI-RS.

In embodiments of the present disclosure, the network side device sends first indication information, so that the terminal measures reference signal resource associated with the first indication information and reports a measurement result. Through the above solution, the terminal can adaptively determine the reference signal resource that needs to be measured and report the measurement result, so that the network side device can adaptively adjust antenna power or turning-on and turning-off of an antenna port based on the measurement result, thereby reducing the energy consumption of the base station.

In some embodiments, the spatial domain adaptation indication information includes at least one of the following:
spatial domain adaptation type information, which is used to indicate whether the spatial domain adaptation type is type 1 spatial domain adaptation or type 2 spatial domain adaptation;
antenna port array related information, the antenna port array related information including at least one of antenna port number information, antenna panel information, and antenna dimension information, the antenna dimension information including first dimension information (e.g., horizontal direction) and second dimension information (e.g., vertical direction) related to the antenna array;
power information associated with channel state information reference signal (CSI-RS) resource;
transmission configuration indicator (TCI) state indication information, where the TCI state indication information is used to indicate transmission beam information.

In some embodiments, the spatial domain adaptation indication information is spatial domain adaptation pattern/mode information.

It should be noted that the spatial domain adaptation pattern/mode in the embodiments of the present disclosure may also be described as a spatial domain adaptation design, manner, style, etc., and the above pattern may also be described as mode.

In some embodiments, the set of spatial domain adaptation patterns is associated with a channel state information reference signal CSI-RS resource; or, each CSI-RS resource (configured by the network side device) corresponds to one spatial domain adaptation pattern.

In some embodiments, when the spatial domain adaptation type information indicates a first spatial domain adaptation type, each spatial domain adaptation pattern corresponds to an independent set of antenna port array related information, and/or the set of spatial domain adaptation patterns is associated with a CSI-RS resource;
when the spatial domain adaptation type information indicates a second spatial domain adaptation type, multiple spatial domain adaptation patterns correspond to the same antenna port array related information, and/or each CSI-RS resource (configured by the network side device) corresponds to one of the spatial domain adaptation patterns.

In some embodiments, when the set of spatial domain adaptation patterns is associated with a CSI-RS resource, an identifier of the spatial domain adaptation pattern corresponding to the CSI-RS resource is a maximum identifier or a minimum identifier of the spatial domain adaptation pattern in the set of spatial domain adaptation patterns.

In some embodiments, periodic or semi-persistent CSI-RS resource corresponding to at least one spatial domain adaptation pattern is associated with a same reporting time.

In some embodiments, the periodic or semi-persistent CSI-RS resource corresponding to the at least one spatial domain adaptation pattern includes CSI-RS resource corresponding to the spatial domain adaptation pattern within a time window, and the CSI-RS resource corresponding to the spatial domain adaptation pattern within the time window is associated with a CSI report setting, and the time window is a time window associated with the spatial domain adaptation;
or, the CSI-RS resource associated with the at least one spatial domain adaptation pattern is associated with at least one CSI report setting, and the at least one CSI report setting is reported in a same time unit.

In some embodiments, each spatial domain adaptation pattern associated with a same CSI report setting corresponds to an independent CSI reporting quantity;
or, multiple spatial domain adaptation patterns associated with the same CSI report setting correspond to a same first CSI reporting quantity, and the multiple spatial domain adaptation patterns correspond to independent second CSI reporting quantities.

In some embodiments, the method in embodiments of the present disclosure further includes:
sending second indication information, where the second indication information includes at least one of spatial domain adaptation update information and power domain adaptation update information.

In some embodiments, the spatial domain adaptation update information includes at least one of the following:
spatial domain adaptation activation information or spatial domain adaptation deactivation information;
subset information of the set of spatial domain adaptation patterns.

In some embodiments, the power domain adaptation update information includes:
power domain network energy saving activation information or power domain network energy saving deactivation information, or power domain network energy saving aperiodic reporting triggering information.

The spatial domain adaptation update information and the power domain adaptation update information have been described in detail in the method embodiment on the terminal side and will not be repeated here.

It should be noted that the information transmission method executed by the network side device is a method corresponding to the above-mentioned information transmission method executed by the terminal. The specific interaction process between the network side device and the terminal has been described in detail in the above embodiments and will not be repeated here.

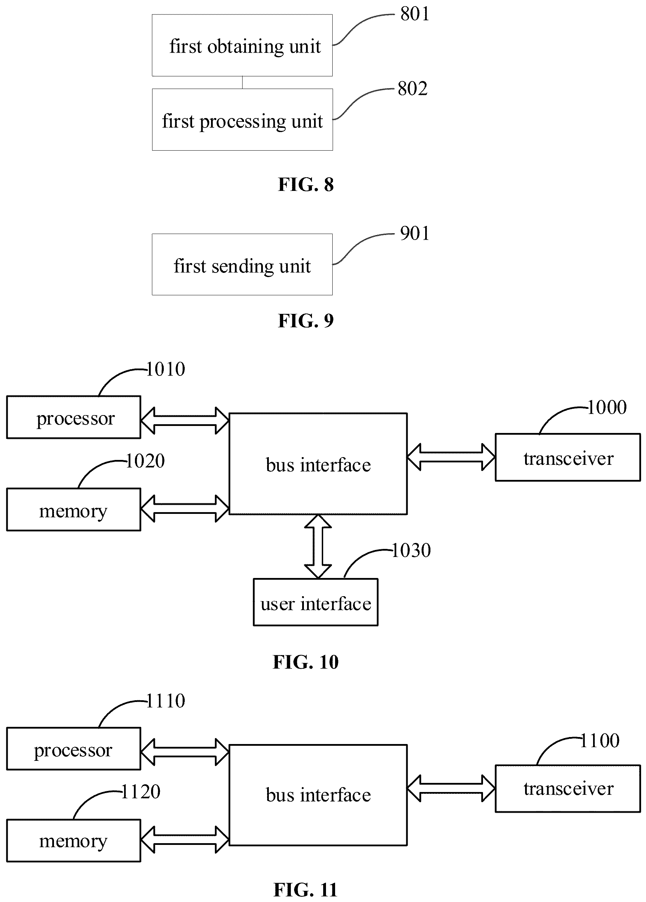

As shown in FIG. 8, embodiments of the present disclosure further provide an information transmission device, including:
a first obtaining unit 801, configured to obtain first indication information, where the first indication information includes spatial domain adaptation indication information and/or power domain adaptation indication information;
a first processing unit 802, configured to measure reference signal resource associated with the first indication information and report a measurement result.

In some embodiments, the spatial domain adaptation indication information includes at least one of the following:
spatial domain adaptation type information;
antenna port array related information;
power information associated with channel state information reference signal (CSI-RS) resource;
transmission configuration indicator state indication information.

In some embodiments, the spatial domain adaptation indication information is spatial domain adaptation pattern or mode information.

In some embodiments, the first obtaining unit is configured to obtain the spatial domain adaptation type information through radio resource control RRC signaling or dynamic signaling;
or, obtaining the spatial domain adaptation type information through the antenna port array related information associated with the spatial domain adaptation indication information.

In some embodiments, a set of spatial domain adaptation patterns is associated with a channel state information reference signal CSI-RS resource; or, each CSI-RS resource (configured by a network side device) corresponds to a spatial domain adaptation pattern.

In some embodiments, when the spatial domain adaptation type information indicates a first spatial domain adaptation type, each spatial domain adaptation pattern corresponds to an independent set of antenna port array related information, and/or the set of spatial domain adaptation patterns is associated with a CSI-RS resource;
when the spatial domain adaptation type information indicates a second spatial domain adaptation type, multiple spatial domain adaptation patterns correspond to the same antenna port array related information, and/or each CSI-RS resource (configured by the network side device) corresponds to one of the spatial domain adaptation patterns.

In some embodiments, when the set of spatial domain adaptation patterns is associated with a CSI-RS resource, an identifier of the spatial domain adaptation pattern corresponding to the CSI-RS resource is a maximum identifier or a minimum identifier of the spatial domain adaptation pattern in the set of spatial domain adaptation patterns.

In some embodiments, periodic or semi-persistent CSI-RS resource corresponding to at least one spatial domain adaptation pattern is associated with a same reporting time.

In some embodiments, the periodic or semi-persistent CSI-RS resource corresponding to the at least one spatial domain adaptation pattern includes CSI-RS resource corresponding to the spatial domain adaptation pattern within a time window, and the CSI-RS resource corresponding to the spatial domain adaptation pattern within the time window is associated with a CSI report setting, and the time window is a time window associated with the spatial domain adaptation;
or, the CSI-RS resource associated with the at least one spatial domain adaptation pattern is associated with at least one CSI report setting, and the at least one CSI report setting is reported in a same time unit.

In some embodiments, the device in embodiments of the present disclosure further includes:
a second obtaining unit, configured to obtain the time window indicated by a network side device through RRC signaling or dynamic signaling;
or, a determining unit, configured to determine the time window according to a time period occupied by CSI-RS resource corresponding to the set of spatial domain adaptation patterns.

In some embodiments, each spatial domain adaptation pattern associated with a same CSI report setting corresponds to an independent CSI reporting quantity;
or, multiple spatial domain adaptation patterns associated with the same CSI report setting correspond to a same first CSI reporting quantity, and the multiple spatial domain adaptation patterns correspond to independent second CSI reporting quantities.

In some embodiments, the spatial domain adaptation pattern information includes M spatial domain adaptation patterns among N spatial domain adaptation patterns configured by the network side device, M≤N, and M and N are positive integers respectively;
the first processing unit is configured to measure the reference signal resource associated with the M spatial domain adaptation patterns and report M measurement results.

In some embodiments, the first processing unit is configured to report a first measurement result and measurement result relative information;
where the first measurement result is a measurement result corresponding to a first spatial domain adaptation pattern among the M measurement results;
the measurement result relative information refers to relative information between a second measurement result and the first measurement result, where the second measurement result is a measurement result corresponding to a second spatial domain adaptation pattern among the M measurement results.

In some embodiments, the device in embodiments of the present disclosure further includes:
a third obtaining unit, configured to obtain second indication information, where the second indication information includes at least one of spatial domain adaptation update information and power domain adaptation update information;
a second processing unit, configured to report channel state information CSI or stop reporting the CSI according to the second indication information.

In some embodiments, the third obtaining unit is configured to obtain the spatial domain adaptation update information through first dynamic signaling, where the first dynamic signaling includes first downlink control information DCI or a first media access control control element MAC CE.

In some embodiments, the spatial domain adaptation update information includes at least one of the following:
spatial domain adaptation activation information or spatial domain adaptation deactivation information;
subset information of the set of spatial domain adaptation patterns.

In some embodiments, the first DCI satisfies at least one of the following:
scrambled with a first radio network temporary identity (RNTI), where the first RNTI includes an RNTI dedicated to network energy saving, an RNTI dedicated to spatial domain energy saving, or an RNTI dedicated to spatial domain energy saving and power domain energy saving;
the first DCI includes DCI format 0_1 or DCI format 0_2;
a first field of the first DCI carries spatial domain adaptation update information or non-spatial domain adaptation update information;
a first predefined code point of the first DCI is associated with verification information of the spatial domain adaptation activation information;
a second predefined code point of the first DCI is associated with verification information of the spatial domain adaptation deactivation information;
a second field of the first DCI is used to indicate whether spatial domain adaptation is supported.

In some embodiments, code points carried by the first field correspond to different trigger states, each trigger state is associated with at least one CSI report setting, and each CSI report setting is associated with at least one spatial domain adaptation pattern.

In some embodiments, when CSI report setting associated with the first field belongs to a first CSI report setting set, the first field is used to indicate activation information associated with spatial domain adaptation or deactivation information associated with spatial domain adaptation;
or, when the CSI report setting associated with the first field belongs to a second CSI report setting set, the first field is used to indicate semi-persistent reporting deactivation information associated with non-spatial domain adaptation or semi-persistent reporting activation information associated with non-spatial domain adaptation;
or, when CSI-RS resource associated with the first field belongs to a first CSI-RS resource set, the first field is used to indicate activation information associated with spatial domain adaptation or deactivation information associated with spatial domain adaptation;
or, when the CSI-RS resource associated with the first field belongs to a second CSI-RS resource set, the first field is used to indicate semi-persistent reporting deactivation information associated with non-spatial domain adaptation or semi-persistent reporting activation information associated with non-spatial domain adaptation.

In some embodiments, the second processing unit is configured to, when a trigger state indicated by the first DCI belongs to a first trigger state set or the trigger state indicated by the first DCI is associated with a third CSI-RS resource set, the terminal performing aperiodic CSI reporting related to spatial domain adaptation; and/or, when the trigger state indicated by the first DCI belongs to a second trigger state set or the trigger state indicated by the first DCI is associated with a fourth CSI-RS resource set, the terminal performing aperiodic CSI reporting related to non-spatial domain adaptation, the first trigger state set and the second trigger state set are two different trigger state sets, and the third CSI-RS resource set and the fourth CSI-RS resource set are two different CSI-RS resource sets;
or, when a third field or a target bit in the first DCI indicates aperiodic CSI reporting related to spatial domain adaptation, the terminal performing aperiodic CSI reporting related to spatial domain adaptation; and/or, when the third field or the target bit in the first DCI indicates aperiodic CSI reporting related to non-spatial domain adaptation, the terminal performing aperiodic CSI reporting related to non-spatial domain adaptation.

In some embodiments, at least one spatial domain adaptation pattern is associated with at least one periodic CSI-RS resource and at least one periodic CSI report setting;
the second processing unit is configured to:
report the CSI in a first resource according to the spatial domain adaptation activation information; or stop reporting the CSI in the first resource according to the spatial domain adaptation deactivation information; where the first resource is a resource corresponding to the periodic CSI report setting;
and/or, according to the spatial domain adaptation activation information, report the CSI in a second resource; or, according to the spatial domain adaptation deactivation information, stop reporting the CSI in the second resource, where the second resource is a resource corresponding to the periodic CSI report setting associated with the subset information of the set of spatial domain adaptation patterns.

In some embodiments, at least one spatial domain adaptation pattern is associated with at least one periodic CSI-RS resource or semi-persistent CSI-RS resource, and the at least one spatial domain adaptation patterns is associated with at least one semi-persistent CSI report setting;
the second processing unit is configured to:
according to the spatial domain adaptation activation information, activate semi-persistent CSI reporting on a third resource, or deactivate semi-persistent CSI reporting on the third resource, where the third resource is a resource corresponding to the semi-persistent CSI report setting associated with the subset information of the set of spatial domain adaptation patterns.

In some embodiments, at least one spatial domain adaptation pattern is associated with at least one periodic CSI-RS resource, semi-persistent CSI-RS resource, or aperiodic CSI-RS resource, and the at least one spatial domain adaptation pattern is associated with at least one aperiodic CSI report setting;
the second processing unit is configured to:
according to the spatial domain adaptation update information, perform aperiodic CSI reporting on a fourth resource, where the fourth resource is a resource corresponding to the aperiodic CSI report setting associated with the subset information of the set of spatial domain adaptation patterns.

In some embodiments, the power domain adaptation update information is related to a first set or a second set;
where the first set is a subset of a first power offset value set, and the second set is a subset of a second power offset value set;
the first power offset value set is a set of CSI-RS and PDSCH power offset values, and the second power offset value set is a set of SSB and CSI-RS power offset values.

In some embodiments, the power domain adaptation update information includes:
power domain network energy saving activation information or power domain network energy saving deactivation information, or power domain network energy saving aperiodic reporting triggering information.

In some embodiments, the third obtaining unit is configured to:
obtain the power domain adaptation update information through second dynamic signaling, where the second dynamic signaling includes second downlink control information DCI or a second media access control control element MAC CE.

In some embodiments, the second DCI satisfies at least one of the following:
scrambled with a second radio network temporary identity (RNTI), where the second RNTI includes an RNTI dedicated to power domain network energy saving, or an RNTI dedicated to spatial domain and power domain energy saving;
the second DCI includes DCI format 0_1 or DCI format 0_2;
code points carried by the second DCI correspond to different trigger states, each trigger state is associated with at least one CSI report setting, and each CSI report setting is associated with at least one power domain adaptation pattern;
a fourth field in the second DCI carries the power domain adaptation update information or the spatial domain adaptation update information;
a third predefined code point of the second DCI is associated with verification information of the power domain network energy saving activation information;
a fourth predefined code point of the second DCI is associated with verification information of the power domain network energy saving deactivation information;
a target indicator field of the second DCI is used to indicate that information carried by the fourth field is power domain adaptation update information or spatial domain adaptation update information.

In some embodiments, the second processing unit is configured to:
the terminal reporting the CSI according to the power domain network energy saving activation information or the power domain network energy saving aperiodic reporting triggering information;
or, the terminal stopping reporting the CSI according to the power domain network energy saving deactivation information.

It should be noted here that the above-mentioned device provided in embodiments of the present disclosure can implement all method steps implemented in the above-mentioned information transmission method embodiment applied to the terminal, and can achieve the same technical effects. The parts and beneficial effects of this embodiment that are the same as those of the method embodiment will not be described in detail here.

As shown in FIG. 9, embodiments of the present disclosure further provide an information transmission device, including:
a first sending unit 901, configured to send first indication information, where the first indication information includes spatial domain adaptation indication information and/or power domain adaptation indication information.

In some embodiments, the spatial domain adaptation indication information includes at least one of the following:
spatial domain adaptation type information;
antenna port array related information;
power information associated with channel state information reference signal (CSI-RS) resource;
transmission configuration indicator state indication information.

In some embodiments, the spatial domain adaptation indication information is spatial domain adaptation pattern or mode information.

In some embodiments, a set of spatial domain adaptation patterns is associated with a channel state information reference signal CSI-RS resource; or, each CSI-RS resource (configured by a network side device) corresponds to a spatial domain adaptation pattern.

In some embodiments, when the spatial domain adaptation type information indicates a first spatial domain adaptation type, each spatial domain adaptation pattern corresponds to an independent set of antenna port array related information, and/or the set of spatial domain adaptation patterns is associated with a CSI-RS resource;
when the spatial domain adaptation type information indicates a second spatial domain adaptation type, multiple spatial domain adaptation patterns correspond to the same antenna port array related information, and/or each CSI-RS resource (configured by the network side device) corresponds to one of the spatial domain adaptation patterns.

In some embodiments, when the set of spatial domain adaptation patterns is associated with a CSI-RS resource, an identifier of the spatial domain adaptation pattern corresponding to the CSI-RS resource is a maximum identifier or a minimum identifier of the spatial domain adaptation pattern in the set of spatial domain adaptation patterns.

In some embodiments, periodic or semi-persistent CSI-RS resource corresponding to at least one spatial domain adaptation pattern is associated with a same reporting time.

In some embodiments, the periodic or semi-persistent CSI-RS resource corresponding to the at least one spatial domain adaptation pattern includes CSI-RS resource corresponding to the spatial domain adaptation pattern within a time window, and the CSI-RS resource corresponding to the spatial domain adaptation pattern within the time window is associated with a CSI report setting, and the time window is a time window associated with the spatial domain adaptation;
or, the CSI-RS resource associated with the at least one spatial domain adaptation pattern is associated with at least one CSI report setting, and the at least one CSI report setting is reported in a same time unit.

In some embodiments, each spatial domain adaptation pattern associated with a same CSI report setting corresponds to an independent CSI reporting quantity;
or, multiple spatial domain adaptation patterns associated with the same CSI report setting correspond to a same first CSI reporting quantity, and the multiple spatial domain adaptation patterns correspond to independent second CSI reporting quantities.

In some embodiments, the device in embodiments of the present disclosure further includes:
a second sending unit, configured to send second indication information, where the second indication information includes at least one of spatial domain adaptation update information and power domain adaptation update information.

In some embodiments, the spatial domain adaptation update information includes at least one of the following:
spatial domain adaptation activation information or spatial domain adaptation deactivation information;
subset information of the set of spatial domain adaptation patterns.

In some embodiments, the power domain adaptation update information includes:
power domain network energy saving activation information or power domain network energy saving deactivation information, or power domain network energy saving aperiodic reporting triggering information.

It should be noted here that the above-mentioned device provided in embodiments of the present disclosure can implement all method steps implemented in the above-mentioned information transmission method embodiment applied to the network side device, and can achieve the same technical effects. The parts and beneficial effects of this embodiment that are the same as those of the method embodiment will not be described in detail here.

As shown in FIG. 10, embodiments of the present disclosure provide an information transmission device, which is applied to a terminal and includes a memory 1020, a transceiver 1000, and a processor 1010;
the memory 1020 is configured to store a computer program; the transceiver 1000 is configured to transmit and receive data under the control of the processor 1010; and the processor 1010 is configured to read the computer program in the memory 1020 and perform following operations:
obtaining first indication information, where the first indication information includes spatial domain adaptation indication information and/or power domain adaptation indication information;
measuring reference signal resource associated with the first indication information and reporting a measurement result.

In FIG. 10, the bus architecture may include any number of interconnected buses and bridges, specifically linked together through various circuits of one or more processors represented by processor 1010 and a memory represented by memory 1020. The bus architecture may also link together various other circuits such as peripheral devices, voltage regulators, and power management circuits, which are all well known in the art and, therefore, will not be described further herein. A bus interface provides an interface. The transceiver 1000 may be a plurality of components, including a transmitter and a receiver, providing a unit for communicating with various other devices over a transmission medium, such as a wireless channel, a wired channel, an optical cable, or the like. For different user devices, a user interface 1030 may also be an interface capable of connecting to external or internal devices as required, and the connected devices include but are not limited to a keypad, a display, a speaker, a microphone, a joystick, and the like.

The processor 1010 is responsible for managing the bus architecture and general processing, and the memory 1020 may store data used by the processor 1010 when performing operations.

In some embodiments, the processor 1010 may be a central processing unit (CPU), an application specific integrated circuit (ASIC), a field programmable gate array (FPGA), or a complex programmable logic device (CPLD). The processor may also adopt a multi-core architecture.

The processor calls the computer program stored in the memory to execute any of the methods provided in embodiments of the present disclosure according to obtained executable instructions. The processor and the memory may also be physically separated.

In some embodiments, the spatial domain adaptation indication information includes at least one of the following:
spatial domain adaptation type information;
antenna port array related information;
power information associated with channel state information reference signal (CSI-RS) resource;
transmission configuration indicator state indication information.

In some embodiments, the spatial domain adaptation indication information is spatial domain adaptation pattern or mode information.

In some embodiments, the processor further implements following steps:
obtaining the spatial domain adaptation type information through radio resource control RRC signaling or dynamic signaling;
or, obtaining the spatial domain adaptation type information through the antenna port array related information associated with the spatial domain adaptation indication information.

In some embodiments, a set of spatial domain adaptation patterns is associated with a channel state information reference signal CSI-RS resource; or, each CSI-RS resource (configured by a network side device) corresponds to a spatial domain adaptation pattern.

In some embodiments, when the spatial domain adaptation type information indicates a first spatial domain adaptation type, each spatial domain adaptation pattern corresponds to an independent set of antenna port array related information, and/or the set of spatial domain adaptation patterns is associated with a CSI-RS resource;
when the spatial domain adaptation type information indicates a second spatial domain adaptation type, multiple spatial domain adaptation patterns correspond to the same antenna port array related information, and/or each CSI-RS resource (configured by the network side device) corresponds to one of the spatial domain adaptation patterns.

In some embodiments, when the set of spatial domain adaptation patterns is associated with a CSI-RS resource, an identifier of the spatial domain adaptation pattern corresponding to the CSI-RS resource is a maximum identifier or a minimum identifier of the spatial domain adaptation pattern in the set of spatial domain adaptation patterns.

In some embodiments, periodic or semi-persistent CSI-RS resource corresponding to at least one spatial domain adaptation pattern is associated with a same reporting time.

In some embodiments, the periodic or semi-persistent CSI-RS resource corresponding to the at least one spatial domain adaptation pattern includes CSI-RS resource corresponding to the spatial domain adaptation pattern within a time window, and the CSI-RS resource corresponding to the spatial domain adaptation pattern within the time window is associated with a CSI report setting, and the time window is a time window associated with the spatial domain adaptation;
or, the CSI-RS resource associated with the at least one spatial domain adaptation pattern is associated with at least one CSI report setting, and the at least one CSI report setting is reported in a same time unit.

In some embodiments, the processor further implements following steps:
obtaining the time window indicated by a network side device through RRC signaling or dynamic signaling;
or, determining the time window according to a time period occupied by CSI-RS resource corresponding to the set of spatial domain adaptation patterns.

In some embodiments, each spatial domain adaptation pattern associated with a same CSI report setting corresponds to an independent CSI reporting quantity;
or, multiple spatial domain adaptation patterns associated with the same CSI report setting correspond to a same first CSI reporting quantity, and the multiple spatial domain adaptation patterns correspond to independent second CSI reporting quantities.

In some embodiments, the spatial domain adaptation pattern information includes M spatial domain adaptation patterns among N spatial domain adaptation patterns configured by the network side device, M≤N, and M and N are positive integers respectively;
the terminal measuring the reference signal resource associated with the spatial domain adaptation indication information and reporting the measurement result includes:
the terminal measuring the reference signal resource associated with the M spatial domain adaptation patterns and reporting M measurement results.

In some embodiments, the processor further implements following steps:
reporting a first measurement result and measurement result relative information;
where the first measurement result is a measurement result corresponding to a first spatial domain adaptation pattern among the M measurement results;
the measurement result relative information refers to relative information between a second measurement result and the first measurement result, where the second measurement result is a measurement result corresponding to a second spatial domain adaptation pattern among the M measurement results.

In some embodiments, the processor further implements following steps:
obtaining second indication information, where the second indication information includes at least one of spatial domain adaptation update information and power domain adaptation update information;
reporting channel state information CSI or stopping reporting the CSI according to the second indication information.

In some embodiments, the processor further implements following steps:
obtaining the spatial domain adaptation update information through first dynamic signaling, where the first dynamic signaling includes first downlink control information (DCI) or a first media access control control element (MAC CE).

In some embodiments, the spatial domain adaptation update information includes at least one of the following:
spatial domain adaptation activation information or spatial domain adaptation deactivation information;
subset information of the set of spatial domain adaptation patterns.

In some embodiments, the first DCI satisfies at least one of the following:
scrambled with a first radio network temporary identity (RNTI), where the first RNTI includes an RNTI dedicated to network energy saving, an RNTI dedicated to spatial domain energy saving, or an RNTI dedicated to spatial domain energy saving and power domain energy saving;
the first DCI includes DCI format 0_1 or DCI format 0_2;
a first field of the first DCI carries spatial domain adaptation update information or non-spatial domain adaptation update information;
a first predefined code point of the first DCI is associated with verification information of the spatial domain adaptation activation information;
a second predefined code point of the first DCI is associated with verification information of the spatial domain adaptation deactivation information;
a second field of the first DCI is used to indicate whether spatial domain adaptation is supported.

In some embodiments, code points carried by the first field correspond to different trigger states, each trigger state is associated with at least one CSI report setting, and each CSI report setting is associated with at least one spatial domain adaptation pattern.

In some embodiments, when CSI report setting associated with the first field belongs to a first CSI report setting set, the first field is used to indicate activation information associated with spatial domain adaptation or deactivation information associated with spatial domain adaptation;
or, when the CSI report setting associated with the first field belongs to a second CSI report setting set, the first field is used to indicate semi-persistent reporting deactivation information associated with non-spatial domain adaptation or semi-persistent reporting activation information associated with non-spatial domain adaptation;
or, when CSI-RS resource associated with the first field belongs to a first CSI-RS resource set, the first field is used to indicate activation information associated with spatial domain adaptation or deactivation information associated with spatial domain adaptation;
or, when the CSI-RS resource associated with the first field belongs to a second CSI-RS resource set, the first field is used to indicate semi-persistent reporting deactivation information associated with non-spatial domain adaptation or semi-persistent reporting activation information associated with non-spatial domain adaptation.

In some embodiments, the processor further implements following steps:
when a trigger state indicated by the first DCI belongs to a first trigger state set or the trigger state indicated by the first DCI is associated with a third CSI-RS resource set, the terminal performing aperiodic CSI reporting related to spatial domain adaptation; and/or, when the trigger state indicated by the first DCI belongs to a second trigger state set or the trigger state indicated by the first DCI is associated with a fourth CSI-RS resource set, the terminal performing aperiodic CSI reporting related to non-spatial domain adaptation, the first trigger state set and the second trigger state set are two different trigger state sets, and the third CSI-RS resource set and the fourth CSI-RS resource set are two different CSI-RS resource sets;
or, when a third field or a target bit in the first DCI indicates aperiodic CSI reporting related to spatial domain adaptation, the terminal performing aperiodic CSI reporting related to spatial domain adaptation; and/or, when the third field or the target bit in the first DCI indicates aperiodic CSI reporting related to non-spatial domain adaptation, the terminal performing aperiodic CSI reporting related to non-spatial domain adaptation.

In some embodiments, at least one spatial domain adaptation pattern is associated with at least one periodic CSI-RS resource and at least one periodic CSI report setting.

In some embodiments, the processor further implements following steps:
reporting the CSI in a first resource according to the spatial domain adaptation activation information; or stopping reporting the CSI in the first resource according to the spatial domain adaptation deactivation information; where the first resource is a resource corresponding to the periodic CSI report setting;
and/or, according to the spatial domain adaptation activation information, reporting the CSI in a second resource; or, according to the spatial domain adaptation deactivation information, stopping reporting the CSI in the second resource, where the second resource is a resource corresponding to the periodic CSI report setting associated with the subset information of the set of spatial domain adaptation patterns.

In some embodiments, at least one spatial domain adaptation pattern is associated with at least one periodic CSI-RS resource or semi-persistent CSI-RS resource, and the at least one spatial domain adaptation patterns is associated with at least one semi-persistent CSI report setting.

In some embodiments, the processor further implements following steps:
according to the spatial domain adaptation activation information, activating semi-persistent CSI reporting on a third resource, or deactivating semi-persistent CSI reporting on the third resource, where the third resource is a resource corresponding to the semi-persistent CSI report setting associated with the subset information of the set of spatial domain adaptation patterns.

In some embodiments, at least one spatial domain adaptation pattern is associated with at least one periodic CSI-RS resource, semi-persistent CSI-RS resource, or aperiodic CSI-RS resource, and the at least one spatial domain adaptation pattern is associated with at least one aperiodic CSI report setting.

In some embodiments, the processor further implements following steps:
according to the spatial domain adaptation update information, performing aperiodic CSI reporting on a fourth resource, where the fourth resource is a resource corresponding to the aperiodic CSI report setting associated with the subset information of the set of spatial domain adaptation patterns.

In some embodiments, the power domain adaptation update information is related to a first set or a second set;
where the first set is a subset of a first power offset value set, and the second set is a subset of a second power offset value set;
the first power offset value set is a set of CSI-RS and PDSCH power offset values, and the second power offset value set is a set of SSB and CSI-RS power offset values.

In some embodiments, the power domain adaptation update information includes:
power domain network energy saving activation information or power domain network energy saving deactivation information, or power domain network energy saving aperiodic reporting triggering information.

In some embodiments, the processor further implements following steps:
obtaining the power domain adaptation update information through second dynamic signaling, where the second dynamic signaling includes second downlink control information DCI or a second media access control control element MAC CE.

In some embodiments, the second DCI satisfies at least one of the following:
scrambled with a second radio network temporary identity (RNTI), where the second RNTI includes an RNTI dedicated to power domain network energy saving, or an RNTI dedicated to spatial domain and power domain energy saving;
the second DCI includes DCI format 0_1 or DCI format 0_2;
code points carried by the second DCI correspond to different trigger states, each trigger state is associated with at least one CSI report setting, and each CSI report setting is associated with at least one power domain adaptation pattern;
a fourth field in the second DCI carries the power domain adaptation update information or the spatial domain adaptation update information;
a third predefined code point of the second DCI is associated with verification information of the power domain network energy saving activation information;
a fourth predefined code point of the second DCI is associated with verification information of the power domain network energy saving deactivation information;
a target indicator field of the second DCI is used to indicate that information carried by the fourth field is power domain adaptation update information or spatial domain adaptation update information.

In some embodiments, the processor further implements following steps:
the terminal reporting the CSI according to the power domain network energy saving activation information or the power domain network energy saving aperiodic reporting triggering information;
or, the terminal stopping reporting the CSI according to the power domain network energy saving deactivation information.

It should be noted here that the above-mentioned device provided in embodiments of the present disclosure can implement all method steps implemented in the above-mentioned information transmission method embodiment applied to the terminal, and can achieve the same technical effects. The parts and beneficial effects of this embodiment that are the same as those of the method embodiment will not be described in detail here.

As shown in FIG. 11, embodiments of the present disclosure further provide an information transmission device, including a memory 1120, a transceiver 1100, and a processor 1110;
the memory 1120 is configured to store a computer program; the transceiver 1100 is configured to transmit and receive data under the control of the processor; and the processor 1110 is configured to read the computer program in the memory and perform following operations:
sending first indication information, where the first indication information includes spatial domain adaptation indication information and/or power domain adaptation indication information.

In FIG. 11, the bus architecture may include any number of interconnected buses and bridges, specifically linked together through various circuits of one or more processors represented by processor 1110 and a memory represented by memory 1120. The bus architecture may also link together various other circuits such as peripheral devices, voltage regulators, and power management circuits, which are all well known in the art and, therefore, will not be described further herein. A bus interface provides an interface. The transceiver 1100 may be a plurality of components, including a transmitter and a receiver, providing a unit for communicating with various other devices over a transmission medium, such as a wireless channel, a wired channel, an optical cable, or the like. The processor 1110 is responsible for managing the bus architecture and general processing, and the memory 1120 may store data used by the processor 1110 when performing operations.

The processor 1110 may be a central processing unit (CPU), an application specific integrated circuit (ASIC), a field programmable gate array (FPGA), or a complex programmable logic device (CPLD). The processor may also adopt a multi-core architecture.

In some embodiments, the spatial domain adaptation indication information includes at least one of the following:
spatial domain adaptation type information;
antenna port array related information;
power information associated with channel state information reference signal (CSI-RS) resource;
transmission configuration indicator state indication information.

In some embodiments, the spatial domain adaptation indication information is spatial domain adaptation pattern or mode information.

In some embodiments, a set of spatial domain adaptation patterns is associated with a channel state information reference signal CSI-RS resource; or, each CSI-RS resource (configured by a network side device) corresponds to a spatial domain adaptation pattern.

In some embodiments, when the spatial domain adaptation type information indicates a first spatial domain adaptation type, each spatial domain adaptation pattern corresponds to an independent set of antenna port array related information, and/or the set of spatial domain adaptation patterns is associated with a CSI-RS resource;
when the spatial domain adaptation type information indicates a second spatial domain adaptation type, multiple spatial domain adaptation patterns correspond to the same antenna port array related information, and/or each CSI-RS resource (configured by the network side device) corresponds to one of the spatial domain adaptation patterns.

In some embodiments, when the set of spatial domain adaptation patterns is associated with a CSI-RS resource, an identifier of the spatial domain adaptation pattern corresponding to the CSI-RS resource is a maximum identifier or a minimum identifier of the spatial domain adaptation pattern in the set of spatial domain adaptation patterns.

In some embodiments, periodic or semi-persistent CSI-RS resource corresponding to at least one spatial domain adaptation pattern is associated with a same reporting time.

In some embodiments, the periodic or semi-persistent CSI-RS resource corresponding to the at least one spatial domain adaptation pattern includes CSI-RS resource corresponding to the spatial domain adaptation pattern within a time window, and the CSI-RS resource corresponding to the spatial domain adaptation pattern within the time window is associated with a CSI report setting, and the time window is a time window associated with the spatial domain adaptation;
or, the CSI-RS resource associated with the at least one spatial domain adaptation pattern is associated with at least one CSI report setting, and the at least one CSI report setting is reported in a same time unit.

In some embodiments, each spatial domain adaptation pattern associated with a same CSI report setting corresponds to an independent CSI reporting quantity;
or, multiple spatial domain adaptation patterns associated with the same CSI report setting correspond to a same first CSI reporting quantity, and the multiple spatial domain adaptation patterns correspond to independent second CSI reporting quantities.

In some embodiments, the processor further implements following steps:
sending second indication information, where the second indication information includes at least one of spatial domain adaptation update information and power domain adaptation update information.

In some embodiments, the spatial domain adaptation update information includes at least one of the following:
spatial domain adaptation activation information or spatial domain adaptation deactivation information;
subset information of the set of spatial domain adaptation patterns.

In some embodiments, the power domain adaptation update information includes:
power domain network energy saving activation information or power domain network energy saving deactivation information, or power domain network energy saving aperiodic reporting triggering information.

It should be noted here that the above-mentioned device provided in embodiments of the present disclosure can implement all method steps implemented in the above-mentioned information transmission method embodiment applied to the network side device, and can achieve the same technical effects. The parts and beneficial effects of this embodiment that are the same as those of the method embodiment will not be described in detail here.

It should be noted that the division of units in embodiments of the present disclosure is schematic and is merely a logical function division. There may be other division methods in actual implementation. In addition, each functional unit in each embodiment of the present disclosure may be integrated into one processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure, or the part that contributes to the relevant technology, or all or part of the technical solution can be embodied in the form of a software product. The computer software product is stored in a storage medium and includes a number of instructions for enabling a computer device (which may be a personal computer, a server, or a network device, etc.) or a processor to execute all or part of the steps of the method described in each embodiment of the present disclosure. The aforementioned storage medium includes: U disk, mobile hard disk, read-only memory (ROM), random access memory (RAM), magnetic disk or optical disk, etc., which can store program codes.

In some embodiments of the present disclosure, a processor-readable storage medium is also provided, which stores program instructions. The program instructions are used to enable a processor to execute all steps implemented by the above-mentioned method embodiments executed by the terminal or all steps implemented by the method embodiments executed by the network side device, and can achieve the same technical effects. The parts and beneficial effects of this embodiment that are the same as those of the method embodiment will not be described in detail here.

The terminal device involved in the embodiments of the present disclosure may be a device that provides voice and/or data connectivity to a user, a handheld device with a radio connection function, or other processing devices connected to a radio modem. In different systems, the name of the terminal device may also be different. For example, in the 5G system, the terminal device may be called User Equipment (UE). A radio terminal device may communicate with one or more core networks (CN) via a radio access network (RAN). The radio terminal device may be a mobile terminal device, such as a mobile phone (or a "cellular" phones) and a computer with a mobile terminal device, for example, a portable mobile device, a pocket-sized mobile device, a handheld mobile device, a computer-built-in mobile device or a vehicle-mounted mobile device, which may exchange language and/or data with the radio access network, e.g., a Personal Communication Service (PCS) phone, a cordless phone, a Session Initiated Protocol (SIP) phone, a Wireless Local Loop (WLL) station, a Personal Digital Assistant (PDA), etc. The radio terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present disclosure.

The network device (or the network side device) involved in the embodiments of the present disclosure may be a base station, which may include multiple cells providing services for a terminal. Depending on the specific application scenario, a base station may also be called an access point, or may be a device in an access network that communicates with a radio terminal device through one or more sectors on the air interface, or other names. The network device may be used to convert received air frames into and out of Internet Protocol (IP) packets, acting as a router between the radio terminal device and the rest of the access network, which may include an Internet Protocol (IP) communication network. The network device also coordinates the management of attributes of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolutional network device (evolutional Node B, eNB or e-NodeB) in the Long Term Evolution (LTE) system, a 5G base station (gNB) in the 5G network architecture (next generation system), or a home evolved Node B (HeNB), a relay node, a home base station (femto), a pico base station (pico), etc., but is not limited in the embodiments of the present disclosure. In some network structures, the network device may include centralized unit (CU) nodes and distributed unit (DU) nodes, and the centralized unit and the distributed unit may also be arranged geographically separately.

The network device and the terminal device may each use one or more antennas for Multiple Input Multi Output (MIMO) transmission. MIMO transmission may be single user MIMO (SU-MIMO) or multiple user MIMO (MU-MIMO). Depending on the form and number of antenna combinations, MIMO transmission may be 2 dimensions MIMO (2D-MIMO), 3 dimensions MIMO (3D-MIMO), full dimension MIMO (FD-MIMO), or massive-MIMO, and may also be diversity transmission, precoding transmission, or beamforming transmission, etc.

Those skilled in the art should appreciate that the embodiments of the present disclosure may be provided as methods, systems, or computer program products. Accordingly, the present disclosure may take the form of an entirely hardware embodiment, an entirely software embodiment, or an embodiment combining software and hardware aspects. Furthermore, the present disclosure may take the form of a computer program product embodied on one or more computer-usable storage media (including but not limited to magnetic disk storage and optical storage, etc.) containing computer-usable program codes.

The present disclosure is described with reference to flowcharts and/or block diagrams of methods, devices (systems), and computer program products according to embodiments of the disclosure. It should be understood that each process and/or block in the flowcharts and/or block diagrams, and combinations of processes and/or blocks in the flowcharts and/or block diagrams, can be implemented by computer-executable instructions. These computer-executable instructions can be provided to a processor of a general-purpose computer, a special-purpose computer, an embedded processor, or other programmable data processing device to produce a machine, so that instructions executed by the processor of the computer or other programmable data processing device produce a device for implementing functions specified in one or more processes in the flowchart and/or one or more blocks in the block diagram.

These processor-executable instructions may also be stored in a processor-readable memory that can direct a computer or other programmable data processing device to operate in a specific manner, so that instructions stored in the processor-readable memory produce a product including an instruction device that implements functions specified in one or more processes in the flowchart and/or one or more blocks in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing functions specified in one or more processes in the flowchart and/or one or more blocks in the block diagram.

It should be noted that it should be understood that the division of the above modules is merely a division of logical functions, and in actual implementation, they may be fully or partially integrated into one physical entity, or they may be physically separated. These modules may all be implemented in the form of software called by processing elements; or may also all be implemented in the form of hardware; or some modules may be implemented in the form of software called by processing elements, and some modules may be implemented in the form of hardware. For example, a module may be a separately established processing element, or may be integrated into a chip of the above-mentioned device. In addition, it may be stored in the memory of the above-mentioned device in the form of program code, and called and executed by a processing element of the above-mentioned device to determine the function of the module. The implementation of other modules is similar. In addition, all or part of these modules may be integrated together or implemented independently. The processing element mentioned here may be an integrated circuit having a signal processing capability. During implementation, each step of the above method or each module above may be implemented by an integrated logic circuit of hardware in a processor element or by instructions in the form of software.

For example, each module, unit, sub-unit or sub-module may be one or more integrated circuits configured to implement the above method, such as: one or more application specific integrated circuits (ASIC), or one or more microprocessors (digital signal processor, DSP), or one or more field programmable gate arrays (FPGA), etc. For another example, when a certain module above is implemented in the form of a processing element scheduling a program code, the processing element may be a general-purpose processor, such as a central processing unit (CPU) or other processor that can call program codes. For another example, these modules may be integrated together and implemented in the form of a system-on-a-chip (SOC).

The terms "first", "second", and the like in the description and claims of the present disclosure are used to distinguish similar objects but not necessarily to describe a particular sequence or order. It is to be understood that the terms so used are interchangeable under appropriate circumstances such that the embodiments of the disclosure described herein may be practiced in sequences other than those illustrated or described herein. In addition, the terms "comprise" and "have" and any variations thereof are intended to cover a non-exclusive inclusion. For example, a process, method, system, product or device that includes a series of steps or elements is not necessarily limited to those steps or elements expressly listed but may include other steps or elements not expressly listed or inherent to such process, method, product or device. In addition, the use of "and/or" in the specification and claims indicates at least one of the connected objects, for example, A and/or B and/or C indicates seven situations including A alone, B alone, C alone, both A and B exist, both B and C exist, both A and C exist, and A, B and C exist. Similarly, the use of "at least one of A and B" in this specification and claims should be understood as "A alone, B alone, or both A and B exist".

Obviously, those skilled in the art can make various modifications and variations to the present disclosure without departing from the spirit and scope of the present disclosure. Thus, if these modifications and variations of the present disclosure fall within the scope of the claims of the present disclosure and their equivalents, the present disclosure is intended to include these modifications and variations.

## Claims

1. An information transmission method, comprising:
a terminal obtaining first indication information, wherein the first indication information comprises spatial domain adaptation indication information and/or power domain adaptation indication information;
the terminal measuring reference signal resource associated with the first indication information and reporting a measurement result.

2. The method according to claim 1, wherein the spatial domain adaptation indication information comprises at least one of the following:
spatial domain adaptation type information;
antenna port array related information;
power information associated with channel state information reference signal CSI-RS resource;
transmission configuration indicator state indication information.

3. The method according to claim 1 or 2, wherein the spatial domain adaptation indication information is spatial domain adaptation pattern or mode information.

4. The method according to claim 2, wherein the terminal obtaining the spatial domain adaptation type information comprises:
the terminal obtaining the spatial domain adaptation type information through radio resource control RRC signaling or dynamic signaling;
or, the terminal obtaining the spatial domain adaptation type information through the antenna port array related information associated with the spatial domain adaptation indication information.

5. The method according to claim 3, wherein a set of spatial domain adaptation patterns is associated with a channel state information reference signal CSI-RS resource; or each CSI-RS resource corresponds to a spatial domain adaptation pattern.

6. The method according to claim 3, wherein,
when the spatial domain adaptation type information indicates a first spatial domain adaptation type, each spatial domain adaptation pattern corresponds to an independent set of antenna port array related information, and/or the set of spatial domain adaptation patterns is associated with a CSI-RS resource;
when the spatial domain adaptation type information indicates a second spatial domain adaptation type, multiple spatial domain adaptation patterns correspond to the same antenna port array related information, and/or each CSI-RS resource corresponds to a spatial domain adaptation pattern.

7. The method according to claim 5, wherein, when the set of spatial domain adaptation patterns is associated with a CSI-RS resource, an identifier of the spatial domain adaptation pattern corresponding to the CSI-RS resource is a maximum identifier or a minimum identifier of the spatial domain adaptation pattern in the set of spatial domain adaptation patterns.

8. The method according to claim 3, wherein periodic or semi-persistent CSI-RS resource corresponding to at least one spatial domain adaptation pattern is associated with a same reporting time.

9. The method according to claim 8, wherein the periodic or semi-persistent CSI-RS resource corresponding to the at least one spatial domain adaptation pattern comprises CSI-RS resource corresponding to the spatial domain adaptation pattern within a time window, and the CSI-RS resource corresponding to the spatial domain adaptation pattern within the time window is associated with a CSI report setting, and the time window is a time window associated with the spatial domain adaptation;
or, the CSI-RS resource associated with the at least one spatial domain adaptation pattern is associated with at least one CSI report setting, and the at least one CSI report setting is reported in a same time unit.

10. The method according to claim 9, further comprising:
obtaining the time window indicated by a network side device through RRC signaling or dynamic signaling;
or, determining the time window according to a time period occupied by CSI-RS resource corresponding to the set of spatial domain adaptation patterns.

11. The method according to claim 8, wherein each spatial domain adaptation pattern associated with a same CSI report setting corresponds to an independent CSI reporting quantity;
or, multiple spatial domain adaptation patterns associated with the same CSI report setting correspond to a same first CSI reporting quantity, and the multiple spatial domain adaptation patterns correspond to independent second CSI reporting quantities.

12. The method according to claim 3, wherein the spatial domain adaptation pattern information comprises M spatial domain adaptation patterns among N spatial domain adaptation patterns configured by the network side device, M≤N, and M and N are positive integers respectively;
the terminal measuring the reference signal resource associated with the spatial domain adaptation indication information and reporting the measurement result comprises:
the terminal measuring the reference signal resource associated with the M spatial domain adaptation patterns and reporting M measurement results.

13. The method according to claim 12, wherein the terminal reporting the M measurement results comprises:
the terminal reporting a first measurement result and measurement result relative information;
wherein, the first measurement result is a measurement result corresponding to a first spatial domain adaptation pattern among the M measurement results;
the measurement result relative information refers to relative information between a second measurement result and the first measurement result, wherein the second measurement result is a measurement result corresponding to a second spatial domain adaptation pattern among the M measurement results.

14. The method according to any one of claims 1 to 3, further comprising:
the terminal obtaining second indication information, wherein the second indication information comprises at least one of spatial domain adaptation update information and power domain adaptation update information;
the terminal reporting channel state information CSI or stopping reporting the CSI according to the second indication information.

15. The method according to claim 14, wherein the terminal obtaining the spatial domain adaptation update information comprises:
obtaining the spatial domain adaptation update information through first dynamic signaling, wherein the first dynamic signaling comprises first downlink control information DCI or a first media access control control element MAC CE.

16. The method according to claim 15, wherein the spatial domain adaptation update information comprises at least one of the following:
spatial domain adaptation activation information or spatial domain adaptation deactivation information;
subset information of the set of spatial domain adaptation patterns.

17. The method according to claim 16, wherein the first DCI satisfies at least one of the following:
scrambled with a first radio network temporary identity RNTI, wherein the first RNTI comprises an RNTI dedicated to network energy saving, an RNTI dedicated to spatial domain energy saving, or an RNTI dedicated to spatial domain energy saving and power domain energy saving;
the first DCI comprises DCI format 0_1 or DCI format 0_2;
a first field of the first DCI carries spatial domain adaptation update information or non-spatial domain adaptation update information;
a first predefined code point of the first DCI is associated with verification information of the spatial domain adaptation activation information;
a second predefined code point of the first DCI is associated with verification information of the spatial domain adaptation deactivation information;
a second field of the first DCI is used to indicate whether spatial domain adaptation is supported.

18. The method according to claim 17, wherein code points carried by the first field correspond to different trigger states, each trigger state is associated with at least one CSI report setting, and each CSI report setting is associated with at least one spatial domain adaptation pattern.

19. The method according to claim 17, wherein, when CSI report setting associated with the first field belongs to a first CSI report setting set, the first field is used to indicate activation information associated with spatial domain adaptation or deactivation information associated with spatial domain adaptation;
or, when the CSI report setting associated with the first field belongs to a second CSI report setting set, the first field is used to indicate semi-persistent reporting deactivation information associated with non-spatial domain adaptation or semi-persistent reporting activation information associated with non-spatial domain adaptation;
or, when CSI-RS resource associated with the first field belongs to a first CSI-RS resource set, the first field is used to indicate activation information associated with spatial domain adaptation or deactivation information associated with spatial domain adaptation;
or, when the CSI-RS resource associated with the first field belongs to a second CSI-RS resource set, the first field is used to indicate semi-persistent reporting deactivation information associated with non-spatial domain adaptation or semi-persistent reporting activation information associated with non-spatial domain adaptation.

20. The method according to claim 15, wherein the terminal reporting the channel state information CSI or stopping reporting the CSI according to the spatial domain adaptation update information comprises:
when a trigger state indicated by the first DCI belongs to a first trigger state set or the trigger state indicated by the first DCI is associated with a third CSI-RS resource set, the terminal performing aperiodic CSI reporting related to spatial domain adaptation; and/or, when the trigger state indicated by the first DCI belongs to a second trigger state set or the trigger state indicated by the first DCI is associated with a fourth CSI-RS resource set, the terminal performing aperiodic CSI reporting related to non-spatial domain adaptation, the first trigger state set and the second trigger state set are two different trigger state sets, and the third CSI-RS resource set and the fourth CSI-RS resource set are two different CSI-RS resource sets;
or, when a third field or a target bit in the first DCI indicates aperiodic CSI reporting related to spatial domain adaptation, the terminal performing aperiodic CSI reporting related to spatial domain adaptation; and/or, when the third field or the target bit in the first DCI indicates aperiodic CSI reporting related to non-spatial domain adaptation, the terminal performing aperiodic CSI reporting related to non-spatial domain adaptation.

21. The method according to claim 16, wherein at least one spatial domain adaptation pattern is associated with at least one periodic CSI-RS resource and at least one periodic CSI report setting;
the terminal reporting the channel state information CSI or stopping reporting the CSI according to the spatial domain adaptation update information comprises:
reporting the CSI in a first resource according to the spatial domain adaptation activation information; or stopping reporting the CSI in the first resource according to the spatial domain adaptation deactivation information; wherein the first resource is a resource corresponding to the periodic CSI report setting;
and/or, according to the spatial domain adaptation activation information, reporting the CSI in a second resource; or, according to the spatial domain adaptation deactivation information, stopping reporting the CSI in the second resource, wherein the second resource is a resource corresponding to the periodic CSI report setting associated with the subset information of the set of spatial domain adaptation patterns.

22. The method according to claim 16, wherein at least one spatial domain adaptation pattern is associated with at least one periodic CSI-RS resource or semi-persistent CSI-RS resource, and the at least one spatial domain adaptation patterns is associated with at least one semi-persistent CSI report setting;
the terminal reporting the channel state information CSI or stopping reporting the CSI according to the spatial domain adaptation update information comprises:
according to the spatial domain adaptation activation information, activating semi-persistent CSI reporting on a third resource, or deactivating semi-persistent CSI reporting on the third resource, wherein the third resource is a resource corresponding to the semi-persistent CSI report setting associated with the subset information of the set of spatial domain adaptation patterns.

23. The method according to claim 15, wherein at least one spatial domain adaptation pattern is associated with at least one periodic CSI-RS resource, semi-persistent CSI-RS resource, or aperiodic CSI-RS resource, and the at least one spatial domain adaptation pattern is associated with at least one aperiodic CSI report setting;
the terminal reporting the channel state information CSI according to the spatial domain adaptation update information comprises:
according to the spatial domain adaptation update information, performing aperiodic CSI reporting on a fourth resource, wherein the fourth resource is a resource corresponding to the aperiodic CSI report setting associated with the subset information of the set of spatial domain adaptation patterns.

24. The method according to claim 14, wherein the power domain adaptation update information is related to a first set or a second set;
wherein, the first set is a subset of a first power offset value set, and the second set is a subset of a second power offset value set;
the first power offset value set is a set of CSI-RS and PDSCH power offset values, and the second power offset value set is a set of SSB and CSI-RS power offset values.

25. The method according to claim 14, wherein the power domain adaptation update information comprises:
power domain network energy saving activation information or power domain network energy saving deactivation information, or power domain network energy saving aperiodic reporting triggering information.

26. The method according to claim 14, wherein the terminal obtaining the power domain adaptation update information comprises:
obtaining the power domain adaptation update information through second dynamic signaling, wherein the second dynamic signaling comprises second downlink control information DCI or a second media access control control element MAC CE.

27. The method according to claim 26, wherein the second DCI satisfies at least one of the following:
scrambled with a second radio network temporary identity RNTI, wherein the second RNTI comprises an RNTI dedicated to power domain network energy saving, or an RNTI dedicated to spatial domain and power domain energy saving;
the second DCI comprises DCI format 0_1 or DCI format 0_2;
code points carried by the second DCI correspond to different trigger states, each trigger state is associated with at least one CSI report setting, and each CSI report setting is associated with at least one power domain adaptation pattern;
a fourth field in the second DCI carries the power domain adaptation update information or the spatial domain adaptation update information;
a third predefined code point of the second DCI is associated with verification information of the power domain network energy saving activation information;
a fourth predefined code point of the second DCI is associated with verification information of the power domain network energy saving deactivation information;
a target indicator field of the second DCI is used to indicate that information carried by the fourth field is power domain adaptation update information or spatial domain adaptation update information.

28. The method according to claim 25, wherein the terminal reporting the channel state information CSI or stopping reporting the CSI according to the power domain adaptation update information comprises:
the terminal reporting the CSI according to the power domain network energy saving activation information or the power domain network energy saving aperiodic reporting triggering information;
or, the terminal stopping reporting the CSI according to the power domain network energy saving deactivation information.

29. An information transmission method, comprising:
a network side device sending first indication information, wherein the first indication information comprises spatial domain adaptation indication information and/or power domain adaptation indication information.

30. The method according to claim 29, wherein the spatial domain adaptation indication information comprises at least one of the following:
spatial domain adaptation type information;
antenna port array related information;
power information associated with channel state information reference signal CSI-RS resource;
transmission configuration indicator state indication information.

31. The method according to claim 29 or 30, wherein the spatial domain adaptation indication information is spatial domain adaptation pattern or mode information.

32. The method according to claim 31, wherein a set of spatial domain adaptation patterns is associated with a channel state information reference signal CSI-RS resource; or each CSI-RS resource corresponds to a spatial domain adaptation pattern.

33. The method according to claim 31, wherein,
when the spatial domain adaptation type information indicates a first spatial domain adaptation type, each spatial domain adaptation pattern corresponds to an independent set of antenna port array related information, and/or the set of spatial domain adaptation patterns is associated with a CSI-RS resource;
when the spatial domain adaptation type information indicates a second spatial domain adaptation type, multiple spatial domain adaptation patterns correspond to the same antenna port array related information, and/or each CSI-RS resource corresponds to a spatial domain adaptation pattern.

34. The method according to claim 32, wherein, when the set of spatial domain adaptation patterns is associated with a CSI-RS resource, an identifier of the spatial domain adaptation pattern corresponding to the CSI-RS resource is a maximum identifier or a minimum identifier of the spatial domain adaptation pattern in the set of spatial domain adaptation patterns.

35. The method according to claim 31, wherein periodic or semi-persistent CSI-RS resource corresponding to at least one spatial domain adaptation pattern is associated with a same reporting time.

36. The method according to claim 35, wherein the periodic or semi-persistent CSI-RS resource corresponding to the at least one spatial domain adaptation pattern comprises CSI-RS resource corresponding to the spatial domain adaptation pattern within a time window, and the CSI-RS resource corresponding to the spatial domain adaptation pattern within the time window is associated with a CSI report setting, and the time window is a time window associated with the spatial domain adaptation;
or, the CSI-RS resource associated with the at least one spatial domain adaptation pattern is associated with at least one CSI report setting, and the at least one CSI report setting is reported in a same time unit.

37. The method according to claim 35, wherein each spatial domain adaptation pattern associated with a same CSI report setting corresponds to an independent CSI reporting quantity;
or, multiple spatial domain adaptation patterns associated with the same CSI report setting correspond to a same first CSI reporting quantity, and the multiple spatial domain adaptation patterns correspond to independent second CSI reporting quantities.

38. The method according to any one of claims 29 to 31, further comprising:
sending second indication information, wherein the second indication information comprises at least one of spatial domain adaptation update information and power domain adaptation update information.

39. The method according to claim 38, wherein the spatial domain adaptation update information comprises at least one of the following:
spatial domain adaptation activation information or spatial domain adaptation deactivation information;
subset information of the set of spatial domain adaptation patterns.

40. The method according to claim 38, wherein the power domain adaptation update information comprises:
power domain network energy saving activation information or power domain network energy saving deactivation information, or power domain network energy saving aperiodic reporting triggering information.

41. An information transmission device, comprising:
a first obtaining unit, configured to obtain first indication information, wherein the first indication information comprises spatial domain adaptation indication information and/or power domain adaptation indication information;
a first processing unit, configured to measure reference signal resource associated with the first indication information and report a measurement result.

42. The device according to claim 41, wherein the spatial domain adaptation indication information comprises at least one of the following:
spatial domain adaptation type information;
antenna port array related information;
power information associated with channel state information reference signal CSI-RS resource;
transmission configuration indicator state indication information.

43. The device according to claim 41 or 42, wherein the spatial domain adaptation indication information is spatial domain adaptation pattern or mode information.

44. The device according to claim 42, wherein the first obtaining unit is configured to obtain the spatial domain adaptation type information through radio resource control RRC signaling or dynamic signaling;
or, the terminal obtaining the spatial domain adaptation type information through the antenna port array related information associated with the spatial domain adaptation indication information.

45. The device according to claim 43, wherein a set of spatial domain adaptation patterns is associated with a channel state information reference signal CSI-RS resource; or, each CSI-RS resource corresponds to a spatial domain adaptation pattern.

46. The device according to claim 43, wherein,
when the spatial domain adaptation type information indicates a first spatial domain adaptation type, each spatial domain adaptation pattern corresponds to an independent set of antenna port array related information, and/or the set of spatial domain adaptation patterns is associated with a CSI-RS resource;
when the spatial domain adaptation type information indicates a second spatial domain adaptation type, multiple spatial domain adaptation patterns correspond to the same antenna port array related information, and/or each CSI-RS resource corresponds to a spatial domain adaptation pattern.

47. The device according to claim 43, wherein periodic or semi-persistent CSI-RS resource corresponding to at least one spatial domain adaptation pattern is associated with a same reporting time.

48. The device according to claim 47, wherein the periodic or semi-persistent CSI-RS resource corresponding to the at least one spatial domain adaptation pattern comprises CSI-RS resource corresponding to the spatial domain adaptation pattern within a time window, and the CSI-RS resource corresponding to the spatial domain adaptation pattern within the time window is associated with a CSI report setting, and the time window is a time window associated with the spatial domain adaptation;
or, the CSI-RS resource associated with the at least one spatial domain adaptation pattern is associated with at least one CSI report setting, and the at least one CSI report setting is reported in a same time unit.

49. The device according to claim 43, wherein the spatial domain adaptation pattern information comprises M spatial domain adaptation patterns among N spatial domain adaptation patterns configured by the network side device, M≤N, and M and N are positive integers respectively;
the first processing unit is configured to measure the reference signal resource associated with the M spatial domain adaptation patterns and report M measurement results.

50. The device according to claim 49, wherein the first processing unit is configured to report a first measurement result and measurement result relative information;
wherein, the first measurement result is a measurement result corresponding to a first spatial domain adaptation pattern among the M measurement results;
the measurement result relative information refers to relative information between a second measurement result and the first measurement result, wherein the second measurement result is a measurement result corresponding to a second spatial domain adaptation pattern among the M measurement results.

51. The device according to any one of claims 41 to 43, wherein the device further comprises:
a third obtaining unit, configured to obtain second indication information, wherein the second indication information comprises at least one of spatial domain adaptation update information and power domain adaptation update information;
a second processing unit, configured to report channel state information CSI or stop reporting the CSI according to the second indication information.

52. The device according to claim 51, wherein the third obtaining unit is configured to:
obtain the spatial domain adaptation update information through first dynamic signaling, wherein the first dynamic signaling comprises first downlink control information DCI or a first media access control control element MAC CE.

53. The device according to claim 52, wherein the spatial domain adaptation update information comprises at least one of the following:
spatial domain adaptation activation information or spatial domain adaptation deactivation information;
subset information of the set of spatial domain adaptation patterns.

54. An information transmission device, comprising:
a first sending unit, configured to send first indication information, wherein the first indication information comprises spatial domain adaptation indication information and/or power domain adaptation indication information.

55. The device according to claim 54, wherein the spatial domain adaptation indication information comprises at least one of the following:
spatial domain adaptation type information;
antenna port array related information;
power information associated with channel state information reference signal CSI-RS resource;
transmission configuration indicator state indication information.

56. The device according to claim 54 or 55, wherein the spatial domain adaptation indication information is spatial domain adaptation pattern or mode information.

57. The device according to claim 56, wherein a set of spatial domain adaptation patterns is associated with a channel state information reference signal CSI-RS resource; or each CSI-RS resource corresponds to a spatial domain adaptation pattern.

58. The device according to claim 56, wherein,
when the spatial domain adaptation type information indicates a first spatial domain adaptation type, each spatial domain adaptation pattern corresponds to an independent set of antenna port array related information, and/or the set of spatial domain adaptation patterns is associated with a CSI-RS resource;
when the spatial domain adaptation type information indicates a second spatial domain adaptation type, multiple spatial domain adaptation patterns correspond to the same antenna port array related information, and/or each CSI-RS resource corresponds to a spatial domain adaptation pattern.

59. The device according to claim 56, wherein periodic or semi-persistent CSI-RS resource corresponding to at least one spatial domain adaptation pattern is associated with a same reporting time.

60. The device according to claim 59, wherein the periodic or semi-persistent CSI-RS resource corresponding to the at least one spatial domain adaptation pattern comprises CSI-RS resource corresponding to the spatial domain adaptation pattern within a time window, and the CSI-RS resource corresponding to the spatial domain adaptation pattern within the time window is associated with a CSI report setting, and the time window is a time window associated with the spatial domain adaptation;
or, the CSI-RS resource associated with the at least one spatial domain adaptation pattern is associated with at least one CSI report setting, and the at least one CSI report setting is reported in a same time unit.

61. The device according to any one of claims 54 to 56, wherein the device further comprises:
a second sending unit, configured to send second indication information, wherein the second indication information comprises at least one of spatial domain adaptation update information and power domain adaptation update information.

62. The device according to claim 61, wherein the spatial domain adaptation update information comprises at least one of the following:
spatial domain adaptation activation information or spatial domain adaptation deactivation information;
subset information of the set of spatial domain adaptation patterns.

63. An information transmission device, comprising: a memory, a transceiver, and a processor; wherein,
the memory is configured to store a computer program;
the transceiver is configured to transmit and receive data under the control of the processor; and
the processor is configured to read the computer program in the memory and perform following operations:
obtaining first indication information, wherein the first indication information comprises spatial domain adaptation indication information and/or power domain adaptation indication information;
measuring reference signal resource associated with the first indication information and reporting a measurement result.

64. The device according to claim 63, wherein the spatial domain adaptation indication information comprises at least one of the following:
spatial domain adaptation type information;
antenna port array related information;
power information associated with channel state information reference signal CSI-RS resource;
transmission configuration indicator state indication information.

65. The device according to claim 63 or 64, wherein the spatial domain adaptation indication information is spatial domain adaptation pattern or mode information.

66. The device according to claim 64, wherein the processor further implements following steps:
obtaining the spatial domain adaptation type information through radio resource control RRC signaling or dynamic signaling;
or, the terminal obtaining the spatial domain adaptation type information through the antenna port array related information associated with the spatial domain adaptation indication information.

67. The device according to claim 65, wherein a set of spatial domain adaptation patterns is associated with a channel state information reference signal CSI-RS resource; or each CSI-RS resource corresponds to a spatial domain adaptation pattern.

68. The device according to claim 65, wherein,
when the spatial domain adaptation type information indicates a first spatial domain adaptation type, each spatial domain adaptation pattern corresponds to an independent set of antenna port array related information, and/or the set of spatial domain adaptation patterns is associated with a CSI-RS resource;
when the spatial domain adaptation type information indicates a second spatial domain adaptation type, multiple spatial domain adaptation patterns correspond to the same antenna port array related information, and/or each CSI-RS resource corresponds to a spatial domain adaptation pattern.

69. The device according to claim 65, wherein periodic or semi-persistent CSI-RS resource corresponding to at least one spatial domain adaptation pattern is associated with a same reporting time.

70. The device according to claim 69, wherein the periodic or semi-persistent CSI-RS resource corresponding to the at least one spatial domain adaptation pattern comprises CSI-RS resource corresponding to the spatial domain adaptation pattern within a time window, and the CSI-RS resource corresponding to the spatial domain adaptation pattern within the time window is associated with a CSI report setting, and the time window is a time window associated with the spatial domain adaptation;
or, the CSI-RS resource associated with the at least one spatial domain adaptation pattern is associated with at least one CSI report setting, and the at least one CSI report setting is reported in a same time unit.

71. The device according to claim 70, wherein the processor further implements following steps:
obtaining the time window indicated by a network side device through RRC signaling or dynamic signaling;
or, determining the time window according to a time period occupied by CSI-RS resource corresponding to the set of spatial domain adaptation patterns.

72. The device according to claim 65, wherein the spatial domain adaptation pattern information comprises M spatial domain adaptation patterns among N spatial domain adaptation patterns configured by the network side device, M≤N, and M and N are positive integers respectively;
the measuring the reference signal resource associated with the spatial domain adaptation indication information and reporting the measurement result comprises:
measuring the reference signal resource associated with the M spatial domain adaptation patterns and reporting M measurement results.

73. The device according to claim 72, wherein the processor further implements following steps:
the terminal reporting a first measurement result and measurement result relative information;
wherein, the first measurement result is a measurement result corresponding to a first spatial domain adaptation pattern among the M measurement results;
the measurement result relative information refers to relative information between a second measurement result and the first measurement result, wherein the second measurement result is a measurement result corresponding to a second spatial domain adaptation pattern among the M measurement results.

74. The device according to any one of claims 63 to 65, wherein the processor further implements following steps:
obtaining second indication information, wherein the second indication information comprises at least one of spatial domain adaptation update information and power domain adaptation update information;
reporting channel state information CSI or stopping reporting the CSI according to the second indication information.

75. The device according to claim 74, wherein the processor further implements following steps:
obtaining the spatial domain adaptation update information through first dynamic signaling, wherein the first dynamic signaling comprises first downlink control information DCI or a first media access control control element MAC CE.

76. The device according to claim 75, wherein the spatial domain adaptation update information comprises at least one of the following:
spatial domain adaptation activation information or spatial domain adaptation deactivation information;
subset information of the set of spatial domain adaptation patterns.

77. An information transmission device, comprising: a memory, a transceiver, and a processor; wherein,
the memory is configured to store a computer program;
the transceiver is configured to transmit and receive data under the control of the processor; and
the processor is configured to read the computer program in the memory and perform following operations:
sending first indication information, wherein the first indication information comprises spatial domain adaptation indication information and/or power domain adaptation indication information.

78. The device according to claim 77, wherein the spatial domain adaptation indication information comprises at least one of the following:
spatial domain adaptation type information;
antenna port array related information;
power information associated with channel state information reference signal CSI-RS resource;
transmission configuration indicator state indication information.

79. The device according to claim 77 or 78, wherein the spatial domain adaptation indication information is spatial domain adaptation pattern or mode information.

80. The device according to claim 79, wherein a set of spatial domain adaptation patterns is associated with a channel state information reference signal CSI-RS resource; or each CSI-RS resource corresponds to a spatial domain adaptation pattern.

81. The device according to claim 79, wherein,
when the spatial domain adaptation type information indicates a first spatial domain adaptation type, each spatial domain adaptation pattern corresponds to an independent set of antenna port array related information, and/or the set of spatial domain adaptation patterns is associated with a CSI-RS resource;
when the spatial domain adaptation type information indicates a second spatial domain adaptation type, multiple spatial domain adaptation patterns correspond to the same antenna port array related information, and/or each CSI-RS resource corresponds to a spatial domain adaptation pattern.

82. The device according to claim 78, wherein periodic or semi-persistent CSI-RS resource corresponding to at least one spatial domain adaptation pattern is associated with a same reporting time.

83. The device according to claim 82, wherein the periodic or semi-persistent CSI-RS resource corresponding to the at least one spatial domain adaptation pattern comprises CSI-RS resource corresponding to the spatial domain adaptation pattern within a time window, and the CSI-RS resource corresponding to the spatial domain adaptation pattern within the time window is associated with a CSI report setting, and the time window is a time window associated with the spatial domain adaptation;
or, the CSI-RS resource associated with the at least one spatial domain adaptation pattern is associated with at least one CSI report setting, and the at least one CSI report setting is reported in a same time unit.

84. The device according to any one of claims 77 to 79, wherein the processor further implements following steps:
sending second indication information, wherein the second indication information comprises at least one of spatial domain adaptation update information and power domain adaptation update information.

85. The device according to claim 84, wherein the spatial domain adaptation update information comprises at least one of the following:
spatial domain adaptation activation information or spatial domain adaptation deactivation information;
subset information of the set of spatial domain adaptation patterns.

86. A processor-readable storage medium, storing a computer program, wherein the computer program is configured to cause a processor to execute steps of the information transmission method according to any one of claims 1 to 28, or to execute steps of the information transmission method according to any one of claims 29 to 40.
